Europäisches Patentamt

European Patent Office

Office européen des brevets

(11) Numéro de publication : **0 385 528 B1**

(19)

## (12) FASCICULE DE BREVET EUROPEEN

(45) Date de publication du fascicule du brevet :
**31.05.95 Bulletin 95/22**

(51) Int. Cl.⁶ : **G01S 5/16,** B25J 13/08,
B25J 19/02

(21) Numéro de dépôt : **90200358.1**

(22) Date de dépôt : **16.02.90**

(54) **Procédé et système de détermination de la position et de l'orientation relatives de deux objets dans l'espace.**

(30) Priorité : **27.02.89 FR 8902935**

(43) Date de publication de la demande :
**05.09.90 Bulletin 90/36**

(45) Mention de la délivrance du brevet :
**31.05.95 Bulletin 95/22**

(84) Etats contractants désignés :
**DE FR GB**

(56) Documents cités :
**GB-A- 2 005 950**
**US-A- 4 238 828**
**US-A- 4 672 562**

(73) Titulaire : **Tournier, Jean-Louis**
**Lo Mas Polit,**
**Villeneuve les Bouloc**
**F-31620 Fronton (FR)**
Titulaire : **David, Jacques**
**Route de Lavaur**
**F-31380 Montastruc (FR)**

(72) Inventeur : **Tournier, Jean-Louis**
**Lo Mas Polit,**
**Villeneuve Les Bouloc**
**F-31620 Fronton (FR)**
Inventeur : **David, Jacques**
**Route de Lavaur**
**F-31380 Montastruc (FR)**
Inventeur : **Cattoen, Michel**
**19, rue des Géraniums**
**F-31400 Toulouse (FR)**

(74) Mandataire : **Barre, Philippe**
**Cabinet Barre-Gatti-Laforgue**
**95 rue des Amidonniers**
**F-31069 Toulouse Cédex (FR)**

## Description

L'invention concerne un procédé de détermination de paramètres de position et d'orientation relatives dans l'espace d'un premier objet (désigné par A dans la suite) par rapport à un second objet (désigné par B). L'invention vise un procédé dans lequel la détermination est effectuée par émission de faisceaux lumineaux, notamment laser, à partir d'un des objets et observations de taches formés par ces faisceaux.

L'invention s'étend à des sytèmes de détermination en vue de la mise en oeuvre du procédé.

On connaît des systèmes dans lesquels des faisceaux lumineux sont émis depuis un premier objet A vers un second objet B, les taches formées sur l'objet B étant observées à partir de l'objet A. La détermination des paramètres de position et d'orientation relatives des objets s'effectue par triangulation, grâce à de multiples mesures. Ces systèmes présentent l'inconvénient de conduire à des calculs complexes car les surfaces des objets peuvent être de formes diverses et de caractéristiques réflexives très différentes. De plus, ces systèmes ne sont pas applicables dans les cas où les objets ne sont pas visibles l'un à partir de l'autre (exemple : brevet US 4.238.828).

D'autres systèmes réalisent l'observation au moyen d'un système optique, de points caractéristiques de l'objet et déduisent des images captées la position et l'orientation de l'objet par rapport au dispositif d'observation. Toutefois, ces systèmes nécessitent la présence de points caractéristiques sur l'objet étudié et leur identification dans l'image, ce qui limite l'application de ces systèmes à certains types d'objets (exemple : brevet US 4.672.562).

La présente invention vise à fournir un nouveau procédé et de nouveaux systèmes de détermination des positions relatives de deux objets qui soient applicables à tout type d'objet et conduisent à des calculs très simplifiés par rapport aux systèmes connus.

Un autre objectif est de fournir des systèmes de grande simplicité structurelle, et facile à mettre en oeuvre, en raison de leur caractère statique (pas de pièces en mouvement).

Un autre objectif est de fournir un procédé et des systèmes ayant un très large champ d'application : robotique, aéronautique, espace...

A cet effet, le procédé conforme à l'invention pour déterminer les paramètres de position et d'orientation relatives dans l'espace d'un objet A par rapport à un autre objet B consiste :

(a) à émettre à partir de trois points $E_{A1}$, $E_{A2}$, $E_{A3}$ liés à l'objet A et non alignés, trois faisceaux lumineux $F_{A1}$, $F_{A2}$, $F_{A3}$ convergeant en un point P extérieur au plan des trois points, de façon à réaliser une pyramide de géométrie prédéterminée,

(b) à mémoriser les caractéristiques géométriques de ladite pyramide,

(c) à disposer une surface d'observation S de géométrie connue telle que les faisceaux lumineux $F_{A1}$, $F_{A2}$, $F_{A3}$ soient sécants avec ladite surface et engendrent sur celle-ci trois taches lumineuses $T_{A1}$, $T_{A2}$, $T_{A3}$,

(d) à mémoriser les caractéristiques géométriques de la surface d'observation,

(e) à émettre à partir de trois points $E_{B1}$, $E_{B2}$, $E_{B3}$, liés à l'objet B et non alignés, trois faisceaux lumineux $F_{B1}$, $F_{B2}$, $F_{B3}$ de caractéristiques géométriques prédéterminées de façon à engendrer sur ou à travers la surface d'observation trois taches ou images, désignées taches $T_{B1}$, $T_{B2}$, $T_{B3}$,

(f) à mémoriser les caractéristiques géométriques des faisceaux $F_{B1}$, $F_{B2}$, $F_{B2}$,

(g) à observer la surface d'observation S au moyen d'un dispositif de prise de vue (11) de caractéristiques prédéterminées, ce dispositif étant lié à l'objet B et adapté pour engendrer des images $I_{A1}$, $I_{A2}$, $I_{A3}$ des taches $T_{A1}$, $T_{A2}$, $T_{A3}$ et des images $I_{B1}$, $I_{B2}$, $I_{B3}$ des taches $T_{B1}$, $T_{B2}$, $T_{B3}$, sur une surface sensible,

(h) à mémoriser les caractéristiques du dispositif de prise de vue,

(i) à effectuer un traitement d'image en vue de calculer, à partir de la position des images précitées les coordonnées des images $I_{A1}$, $I_{A2}$, $I_{A3}$ dans un repère lié à la surface sensible du dispositif de prise de vue,

(j) à calculer à partir desdites coordonnées, des caractéristiques du dispositif de prise de vue, de la pyramide $E_{A1}$, $E_{A2}$, $E_{A3}$, P, de la surface d'observation et des faisceaux $F_{B1}$, $F_{B2}$, $F_{B3}$ , les coordonnées des sommets de ladite pyramide dans un système de référence lié à l'objet B,

(k) et à en déduire les paramètres de position et d'orientation de l'objet A par rapport à l'objet B.

Ainsi le procédé de l'invention utilise une surface d'observation auxiliaire dont les caractéristiques (optiques et de position) sont choisies dans chaque application pour permettre une observation des taches dans les meilleures conditions. Dans la plupart des applications terrestres et notamment en robotique, cette surface sera choisie plane. L'objet A et l'objet B peuvent être séparés par un obstacle et non visible l'un de l'autre, la présence de la surface d'observation auxiliaire permettant d'effectuer même dans ce cas les mesures sans difficulté, contrairement à la plupart des systèmes connus qui exigent une vision directe d'un objet depuis l'autre. En outre, dans le procédé de l'invention, la combinaison du système de faisceaux pyramidal lié à l'objet A et du système de faisceaux de référence lié à l'objet B permet d'obtenir les six paramètres caractérisant l'objet A par rapport à l'objet B et de s'affranchir des réglages préalables nécessaires dans les dispositifs antérieurs.

Une fois fixées et connues, d'une part, les caractéristiques géométriques des faisceaux issus de A et B, d'autre part, les caractéristiques de dispositif de prise de vue, enfin, les caractéristiques géométriques de la surface d'observation (plane, sphérique...), le procédé permet de déterminer les six paramètres quelles que soient les positions relatives des objets A et B et de la surface d'observation (aux seules conditions que les faisceaux interceptent la surface d'observation et que le dispositif de prise de vue soit apte à les observer).

Le calcul (j) des coordonnées des sommets de la pyramide consiste de préférence :

($j_1$) à calculer les coordonnées des sommets de la pyramide dans un système de référence lié aux taches $T_{A1}$, $T_{A2}$, $T_{A3}$ à partir des paramètres géométriques de la pyramide,

($j_2$) à calculer les coordonnées des taches $T_{B1}$, $T_{B2}$, $T_{B3}$ dans un système de référence lié à l'objet B à partir des caractéristiques du dispositif de prise de vue et des caractéristiques géométriques des faisceaux $F_{B1}$, $F_{B2}$, $F_{B3}$,

($j_3$) à calculer les coordonnées des taches $T_{A1}$, $T_{A2}$, $T_{A3}$ dans un système de référence lié à l'objet B à partir des résultats des coordonnées des images $I_{A1}$, $I_{A2}$, $I_{A3}$,

($j_4$) et à calculer les coordonnées de la pyramide $E_{A1}$, $E_{A2}$, $E_{A3}$ dans le système de référence lié à l'objet B à partir des résultats des calculs ($i_1$), ($i_2$) et ($i_3$).

Cette procédure de calcul correspond à un algorithme qui, comme on le verra plus loin, est simple et rapide à exécuter.

Selon un premier mode de mise en oeuvre, l'on dispose la surface d'observation de façon l'objet A et le dispositif de prise de vue soient d'un même côté de ladite surface d'observation, celle-ci étant constituée par une surface-écran apte à fournir les taches $T_{A1}$, $T_{A2}$, $T_{A3}$ et les taches $T_{B1}$, $T_{B2}$, $T_{B3}$ visibles par le dispositif de prise de vue.

Ce mode de mise en oeuvre est intéressant dans certaines applications car il permet d'utiliser une surface auxiliaire opaque déjà existante, telle que la terre pour les applications aéronautiques, la surface d'un objet spatial pour les applications spatiales ; il permet également d'avoir l'objet A et l'objet B dans le même volume d'évolution (sans obstacle intermédiaire formé par la surface d'observation) ce qui peut être intéressant en robotique lorsque l'objet A est constitué par un organe terminal pourvu d'un outil et que l'objet B est l'objet sur lequel ou à proximité duquel le robot doit travailler.

Selon un second mode de mise en oeuvre, l'on dispose la surface d'observation entre l'objet A et le dispositif de prise de vue, ladite surface d'observation étant constituée par une surface translucide en vue de fournir les taches $T_{A1}$, $T_{A2}$, $T_{A3}$ sous forme d'images visibles du côté du dispositif de prise de vue et des taches $T_{B1}$, $T_{B2}$, $T_{B3}$ également visibles par le dispositif de prise de vue.

Ce mode de mise en oeuvre est intéressant dans certaines applications robotiques car le dispositif de prise de vue (objet B) peut être disposé à l'extérieur de l'espace d'évolution de l'objet A (organe terminal du robot).

Par ailleurs, le procédé conforme à l'invention est de préférence mis en oeuvre dans les conditions suivantes, afin de simplifier encore les procédures de calcul :

(c) l'on met en place une surface d'observation plane,

(e) l'on émet les trois faisceaux $F_{B1}$, $F_{B2}$, $F_{B3}$ parallèlement entre eux et perpendiculairement à la surface d'observation,

(g) l'on positionne le dispositif de prise de vue, de sorte que son axe optique soit aligné avec la direction des faisceaux $F_{B1}$, $F_{B2}$, $F_{B3}$.

Il est à noter que le dispositif de prise de vue peut le cas échéant être lié à la surface d'observation (position et orientation relative connues) ce qui permet alors de modifier librement les caractéristiques optiques de ce dispositif afin d'ajuster son champ d'observation, sans changer la procédure de calcul.

Le procédé de l'invention permet d'engendrer les divers faisceaux suivant des procédures au choix de l'utilisation ce qui, dans chaque application, permet d'optimiser les procédures de discrimination des images des taches. Par exemple, l'on peut discriminer chaque image des taches en émettant seul le faisceau correspondant et en transmettant pour le traitement de l'image une information d'identification dudit faisceau.

Il est également possible de discriminer chaque image des taches en émettant de façon cyclique selon une loi préétablie un nombre variable de faisceaux, en observant les images des taches et en identifiant par un traitement d'image fonction de la loi préétablie chaque image de tache.

Un autre mode de discrimination consiste à émettre des faisceaux de caractéristiques fréquentielles différentes et à discriminer les taches correspondantes par filtrage approprié sur le dispositif de prise de vue.

L'invention s'étend à des systèmes de détermination en vue de la mise en oeuvre du procédé décrit, systèmes susceptibles de revêtir essentiellement deux formes de réalisation.

Le système conforme à une première forme de réalisation comprend :

- trois organes d'émission lumineuse (3), dits organes d'émission A, assujettis à un premier châssis (1) et adaptés pour émettre des faisceaux convergents, ledit premier châssis étant équipé de moyens de fixation (1b) sur l'objet A,

- une surface d'observation translucide (9) placée sur le trajet des faisceaux et assujettie sur un deuxième châssis (10),

- un dispositif de prise de vue (11) assujetti sur un troisième châssis (12) et agencé en regard de la surface d'observation à l'opposé des trois organes d'émission A, ledit dispositif de prise de vue étant doté de moyens d'acquisition en vue de délivrer des signaux représentatifs de la position des images captées,

- trois organes d'émission lumineuse (13), dits organes d'émission B, solidaires du dispositif de prise de vue et adaptés pour émettre des faisceaux vers la surface d'observation,
- des moyens (14) de commande des organes d'émission lumineuse en vue de déclencher les émissions de faisceaux à des instants prédéterminés,
- une mémoire (17) de stockage des caractéristiques géométriques et optiques des faisceaux et système de prise de vue,
- des moyens (15) de traitement d'image adaptés pour traiter les signaux issus des moyens d'acquisition du dispositif de prise de vue,
- et des moyens de calcul (16) agencés pour recevoir les signaux issus des moyens de traitement d'image et les paramètres contenus dans la mémoire de stockage et programmés pour calculer et délivrer les paramètres de position et d'orientation de l'objet A par rapport à l'objet B.

Le système conforme à une seconde forme de réalisation comprend :

- trois organes d'émission lumineuse, dits organes d'émission A, assujettis à un premier châssis et adaptés pour émettre des faisceaux convergents, ledit premier châssis étant équipé de moyens de fixation sur l'objet A,
- une surface d'observation placée sur le trajet des faisceaux et assujettie sur un deuxième châssis, ladite surface étant constituée par une surface-écran (24) apte à engendrer des taches sur sa face située du côté des trois organes d'émission A,
- un dispositif de prise de vue assujetti sur un troisième châssis et agencé en regard de la surface-écran du même côté que les trois organes d'émission A, ledit dispositif de prise de vue étant doté de moyens d'acquisition en vue de délivrer des signaux représentatifs de la position des images captées,
- trois organes d'émission lumineuse, dits organes d'émission B, solidaires du dispositif de prise de vue et adaptés pour émettre des faisceaux vers la surface d'observation,
- des moyens de commande des organes d'émission lumineuse en vue de déclencher les émissions de faisceaux à des instants prédéterminés,
- une mémoire de stockage des caractéristiques géométriques et optiques des faisceaux et système de prise de vue,
- des moyens de traitement d'images adaptés pour traiter les signaux issus des moyens d'acquisition du système de prise de vue,

- et des moyens de calcul agencés pour recevoir les signaux issus des moyens de traitement d'image et les paramètres contenus dans la mémoire de stockage et programmés pour calculer et délivrer les paramètres de position et d'orientation de l'objet A relativement à l'objet B.

L'invention ayant été exposée dans sa forme générale, la description qui suit en référence aux dessins annexés en présente des modes de réalisation et illustre le procédé mis en oeuvre ; sur ces dessins qui font partie intégrante de la présente description :

- la figure 1 est une vue schématique d'ensemble d'un mode de réalisation du système de l'invention appliqué à un robot industriel,
- la figure 2 est une vue en perspective de la partie du système liée au robot, et la figure 3 en est une coupe transversale par un plan horizontal axial $H_1$,
- la figure 4 est une vue en perspective de la partie du système liée au dispositif de prise de vue et la figure 5 en est une vue de profil,
- la figure 6 est un schéma synoptique du système,
- les figures 7 et 8 sont des schémas blocs respectivement de l'ensemble électronique de traitement d'image du système et de son ensemble électronique de commande des faisceaux,
- la figure 9 est un schéma visualisant les faisceaux émis (en traits continus) et les trajets optiques d'observation par le dispositif de prise de vue (en traits discontinus) et la figure 10 un schéma en perspective à échelle plus grande du plan image de la caméra (vu par l'arrière),
- la figure 11 est une représentation géométrique illustrant une des étapes de calcul (calcul des coordonnées des sommets de la pyramide),
- les figures 12a et 12b qui s'enchainent représentent un logigramme illustrant l'algorithme de calcul,
- les figures 13 et 14 sont des logigrammes illustrant des procédés de commande des faisceaux lumineux afin d'assurer une discrimination des taches correspondantes,
- la figure 15 est un schéma illustrant un autre mode de réalisation du système toujours appliqué à un robot,
- la figure 16 est une vue schématique d'ensemble d'un autre mode de réalisation du système de l'invention appliqué à un aéronef,
- la figure 17 est une représentation géométrique partielle visualisant les faisceaux émis à partir de l'objet A vers la surface S dans une variante du procédé,

- la figure 18 est une représentation géométrique d'une des étapes de calcul de cette variante,
- les figures 19a et 19b qui s'enchainent représentent le logigramme de l'algorithme de calcul correspondant à cette variante.

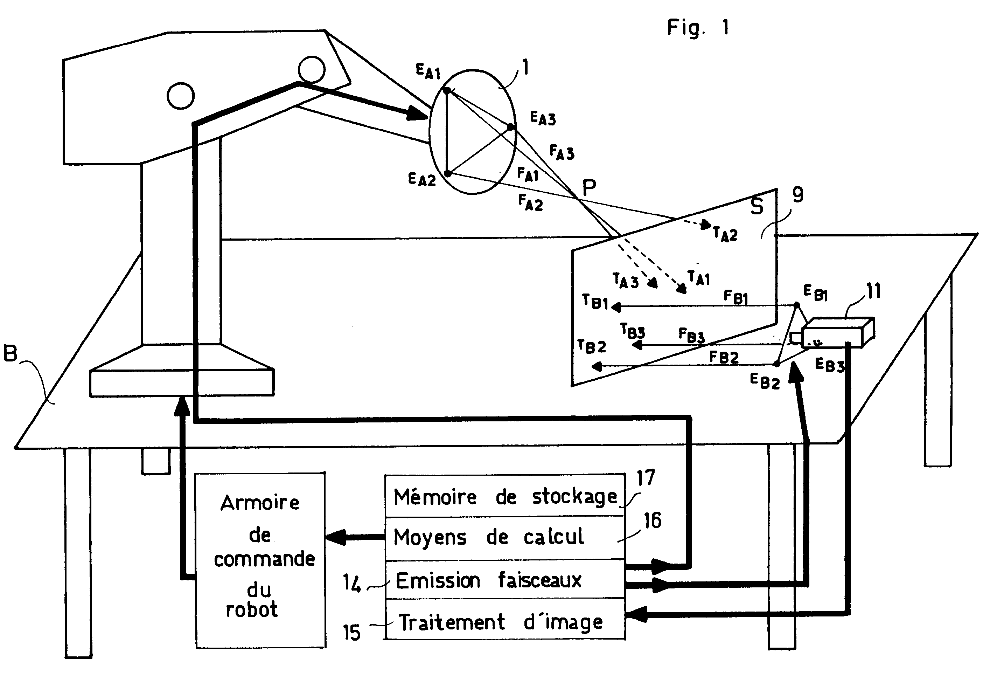

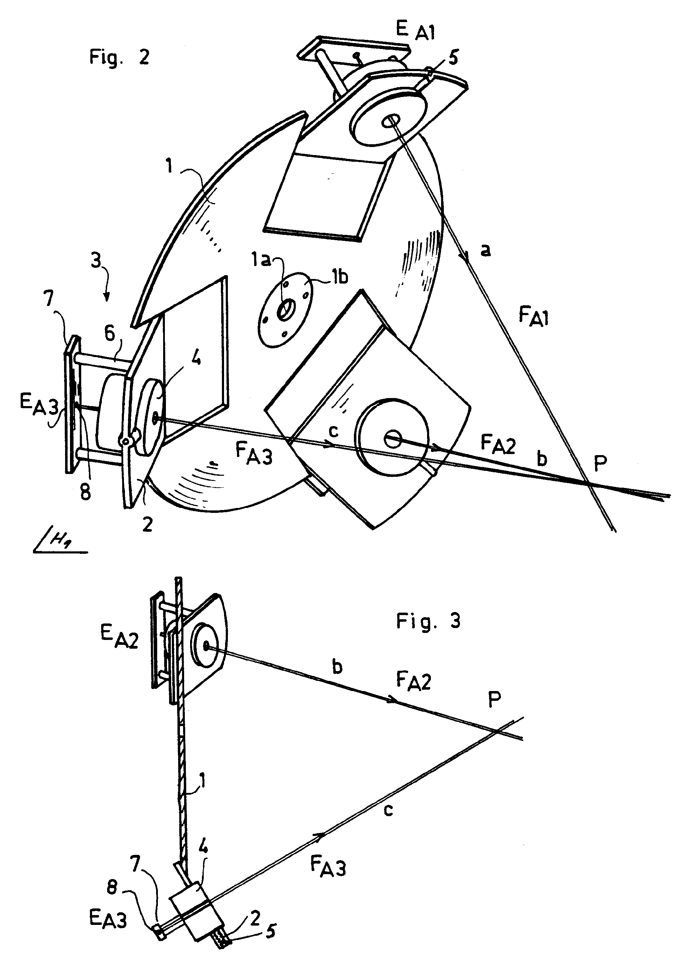

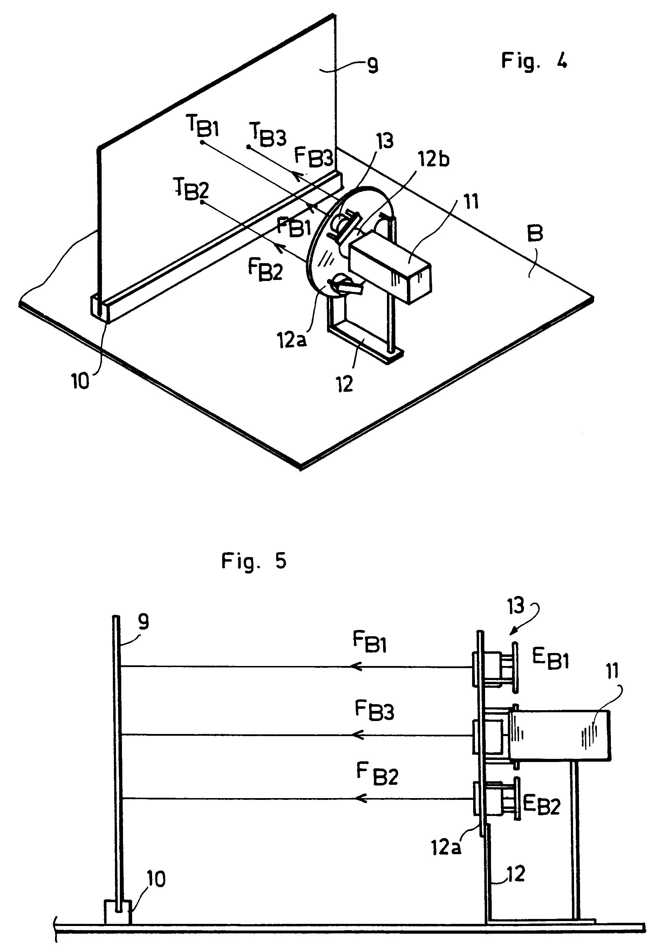

Le système représenté à titre d'exemple aux figures 1 à 8 est destiné à déterminer les paramètres de position et d'orientation de l'organe terminal d'un robot (objet A) par rapport au socle fixe dudit robot (objet B).

Les paramètres à déterminer sont les coordonnées d'un point de l'organe terminal dans un repère cartésien (X, Y, Z) lié au socle et les paramètres d'orientation de cet organe terminal dans le même repère (par exemple, paramètres d'orientation O, A, T dans le langage robotique "VAL 2" ou angles d'Euler utilisés en mécanique).

Le système comprend un premier châssis 1 constitué par une plaque métallique qui comporte un trou central -1a- destiné à s'emboîter sur un mandrin de l'organe terminal, et quatre perçages tels que 1b pour la fixation dudit châssis sur cet organe au moyen de vis. A la périphérie du châssis 1, sont fixées trois plaquettes telles que 2 qui sont inclinées d'un angle prédéterminé par rapport au châssis 1 ; ces plaquettes sont fixées de façon à être réglables en position par rapport au centre du châssis.

Sur chaque plaquette 2, est fixé un organe d'émission lumineuse 3 de type laser. A cet effet, chaque plaquette 2 comporte un trou central à l'intérieur duquel est assujetti un système optique de focalisation 4 constitué par un oculaire de type "Huygens" positionné au moyen d'une vis pression 5. A l'arrière de l'oculaire 4, est fixée sur la plaquette 2 par des entretoises 6, une autre plaquette 7 en un matériau rigide isolant qui porte une diode laser 8 et un circuit électronique d'allumage associé. La vis pression 5 permet de régler la distance de l'oculaire 4 à la diode 8 afin de focaliser le faisceau laser émis.

Les trois plaquettes 2 sont agencées à 120° autour du centre du châssis 1 et leur inclinaison est ajustée de façon que les faisceaux laser $F_{A1}$, $F_{A2}$, $F_{A3}$ convergent en un point P. En l'exemple, pour simplifier les calculs ultérieurs, on a considéré que les faisceaux étaient émis à partir de trois points $E_{A1}$, $E_{A2}$, $E_{A3}$ situés à l'intersection des axes optiques des organes d'émission 3 et de la face plane arrière du châssis 1. Ces points forment une base de pyramide équilatérale ($E_{A1}$, $E_{A2}$, $E_{A3}$). En l'exemple l'inclinaison des plaquettes 2 est ajustée de façon que les trois autres faces de la pyramide soient des triangles isocèles (P, $E_{A1}$, $E_{A2}$ ; P, $E_{A2}$, $E_{A3}$ ; P, $E_{A3}$, $E_{A2}$).

Sur le socle B, est assujettie une surface d'observation 9 qui est fixée sur un châssis 10 constitué par une glissière adaptée pour maintenir cette surface en position verticale sur le trajet des faisceaux lumineux $F_{A1}$, $F_{A2}$, $F_{A3}$. Dans ce mode de réalisation, cette surface est constituée par une mince plaque transparente en "plexiglass" dotée sur sa face côté robot d'une feuille de "mylar" translucide ; cette surface est ainsi apte à engendrer une tache lumineuse $T_{A1}$, $T_{A2}$, $T_{A3}$ au point d'incidence de chaque faisceau $F_{A1}$, $F_{A2}$, $F_{A3}$, visible du côté opposé ; sur la face opposée au mylar, cette surface est réfléchissante.

Par ailleurs, un dispositif de prise de vue 11 à balayage, constitué par une caméra vidéo (caméra "C.C.D.") sensible à la longueur d'onde des diodes laser est fixé par un pied sur un châssis 12 possédant un retour vertical 12a doté à son centre d'un trou 12b aligné avec l'axe optique de la caméra. Sur sa périphérie, ce retour 12a porte trois organes d'émission lumineuse tel que 13, organes de type laser semblables à ceux déjà décrits. Ces organes sont fixés de façon similaire sur le retour 12a de façon à émettre en direction de la surface d'observation 9 trois faisceaux laser $F_{B1}$, $F_{B2}$, $F_{B3}$ parallèles à l'axe optique de la caméra 11.

Les organes d'émission 13 sont agencés à 120° par rapport à l'axe optique de la caméra de façon à être situés au sommet d'un triangle équilatéral. Pour simplifier les calculs ultérieurs, on a considéré que les faisceaux étaient émis à partir de trois points $E_{B1}$, $E_{B2}$, $E_{B3}$ situés à l'intersection des axes optiques des organes d'émission 13 et du plan image de la caméra. Ces faisceaux engendrent sur la surface d'observation 9 des images, dites taches $T_{B1}$, $T_{B2}$, $T_{B3}$. En cet exemple, ce sont les taches réelles formées sur la surface qui sont prises en compte par la caméra, mais il est également possible de prévoir une surface d'observation parfaitement réfléchissante, les images virtuelles étant alors prises en compte.

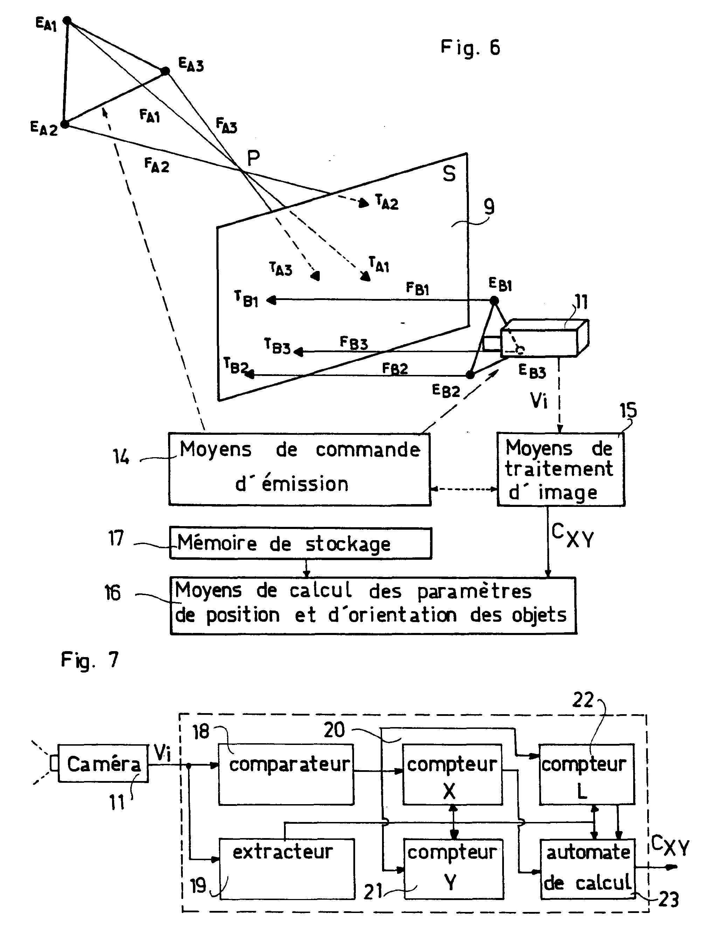

La figure 6 symbolise le système et les faisceaux et taches formées.

Le système comprend en outre des moyens 14 de commande des organes d'émission lumineuse 3 et 13, adaptés pour déclencher les émissions de faisceaux (allumage et extinction des diodes lasers) à des instants prédéterminés. Cette commande d'émission peut être réalisée selon un processus continu, avec une discrimination des taches par des filtres fréquentiels ou par un processus séquentiel (dont deux exemples sont décrits plus loin), ce processus étant mis en oeuvre au moyen d'un logiciel associé aux moyens de commande 14.

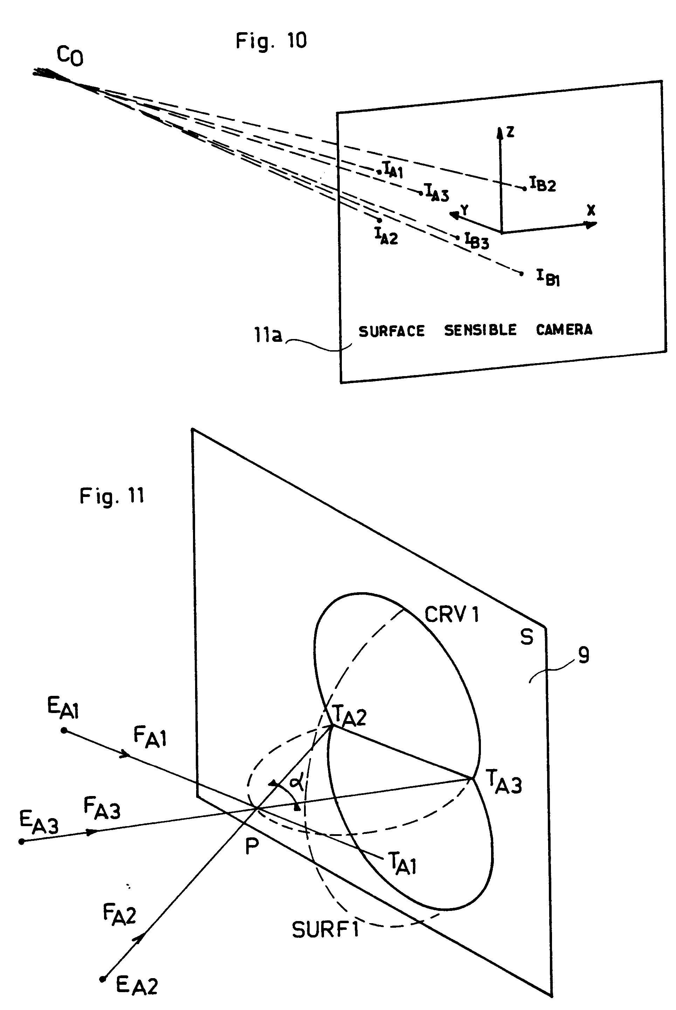

La caméra 11 forme sur sa surface sensible (dans son plan image) des images des taches de la surface d'observation (figure 10) :
- images $I_{A1}$, $I_{A2}$, $I_{A3}$ des taches $T_{A1}$, $T_{A2}$, $T_{A3}$,
- images $I_{B1}$, $I_{B2}$, $I_{B3}$ des taches $T_{B1}$, $T_{B2}$, $T_{B3}$.

La caméra C.C.D. dotée de moyens électroniques d'acquisition classiques engendre un signal vidéo composite $V_i$ représentatif de la position relative des images des taches, captées sur la surface sensible.

Ce signal $V_i$ est délivré vers des moyens de traitement d'image 15 destinés à calculer, à partir dudit signal $V_i$, les coordonnées des images $I_{A1}$, $I_{A2}$, $I_{A3}$ dans un repère lié à la surface sensible de la caméra.

Ces moyens de traitement d'image délivrent un signal numérique $C_{XY}$ représentatif de ces coordonnées vers des moyens de calcul 16.

Par ailleurs, ces moyens de calcul 16 reçoivent d'une mémoire de stockage 17 des données attachées aux caractéristiques spécifiques du système qui sont préalablement mémorisées dans celle-ci : caractéristiques géométriques de la pyramide formée par les faisceaux lumineux $F_{A1}$, $F_{A2}$, $F_{A3}$, caractéristiques géométriques de la surface d'observation (en général surface plane, ou sphérique), caractéristiques géométriques des faisceaux lumineux $F_{B1}$, $F_{B2}$, $F_{B3}$ et caractéristiques du système de prise de vue (focale, caractéristiques d'agencement entre la caméra et les organes d'émission liés à celle-ci).

Les moyens de calcul 16 (micro-calculateur classique) sont programmés pour calculer les coordonnées des sommets $E_{A1}$, $E_{A2}$, $E_{A3}$, P de la pyramide dans le repère cartésien (X Y Z) lié au socle B et en déduire les paramètres de position et d'orientation de l'organe terminal A du robot par rapport au socle B.

La figure 7 donne à titre d'exemple le schéma bloc d'un ensemble électronique constituant les moyens de traitement d'image 15.

Le signal vidéo $V_i$ est délivré, d'une part, à un comparateur 18, qui réalise une détection de seuil afin d'identifier la présence d'une image de tache, d'autre part, à un extracteur de synchronisation 19 de type classique qui délivre des signaux d'horloge à fréquence ligne, à fréquence trame et à fréquence multiple de la fréquence ligne.

Les signaux issus du comparateur 18 et de l'extracteur 19 sont envoyés sur trois compteurs 20, 21 et 22 ; le compteur d'abscisse 20 effectue un comptage de points (pixel) sur chaque ligne afin de fournir un signal numérique représentatif de l'abscisse du premier point de l'image de chaque tache détectée ; le compteur d'ordonnée 21 effectue un comptage de lignes afin de fournir un signal numérique représentatif de l'ordonnée de ce premier point ; le compteur de longueur de tache 22 effectue un comptage, sur chaque ligne, du nombre de points de chaque image de tache (longueur de l'image sur la ligne considérée).

Les signaux issus des trois compteurs 20, 21, 22 et de l'extracteur 19 sont délivrés vers un automate de calcul à microprocesseurs 23, qui délivre pour chaque image de tache détecté l'abscisse et l'ordonnée de son centre de gravité $C_{XY}$ dans un repère lié au plan image de la caméra. Les divers ensembles fonctionnels 18-23 sont bien connus en eux-mêmes.

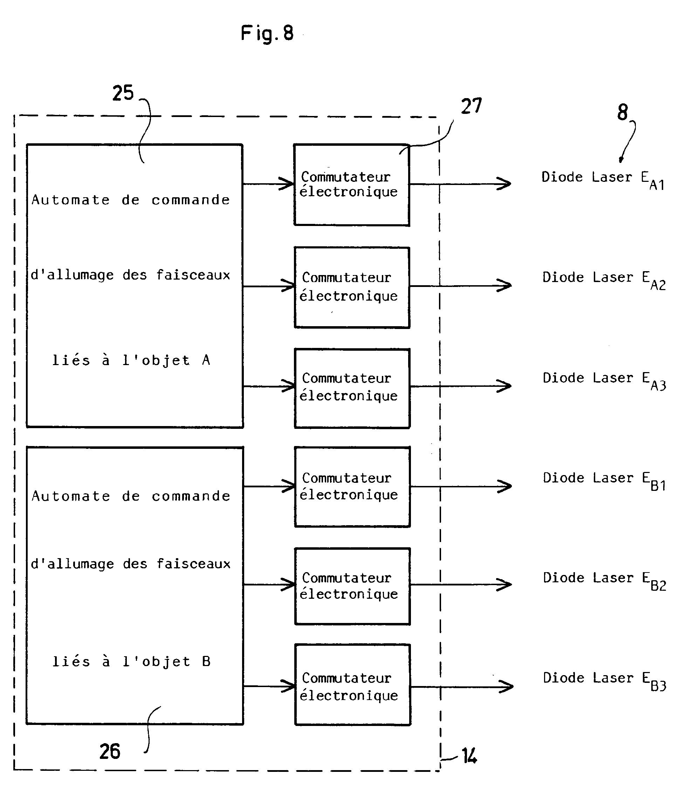

La figure 8 donne à titre d'exemple le schéma bloc d'un ensemble électronique constituant les moyens de commande des faisceaux 14.

Ces moyens de commande 14 comprennent en l'exemple deux automates 25 et 26, l'un destiné à la commande des faisceaux liés au robot A, l'autre destiné à la commande des faisceaux liés au socle B. Chacun de ces automates est constitué de façon classique par un microprocesseur et des circuits électroniques associés et est programmé par un logiciel pour délivrer des séquences de commande prédéterminées vers des commutateurs électroniques tels que 27. Chaque commutateur 27 est agencé sur le circuit d'alimentation d'une diode laser 8 afin de déclencher son allumage et son extinction selon la séquence désirée.

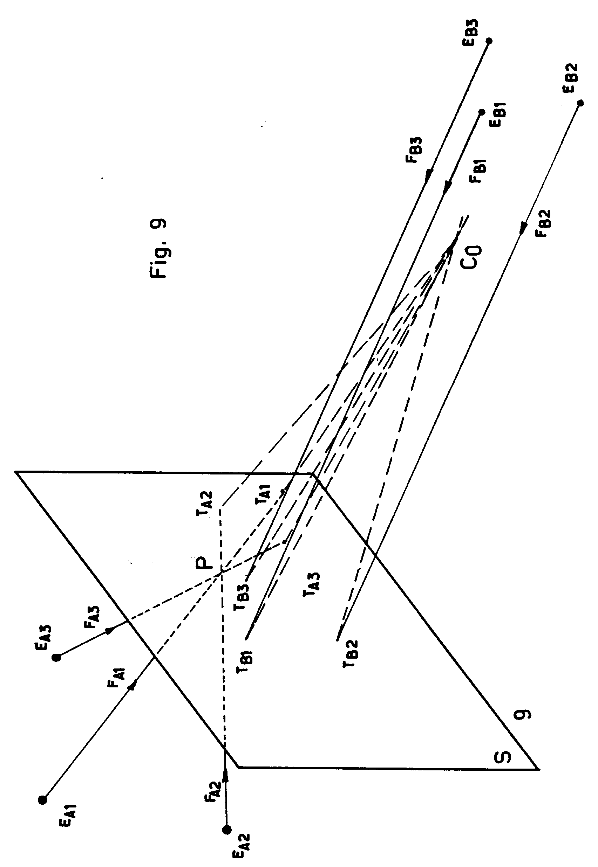

Les figures 9 et 10 sont des dessins géométriques visualisant les faisceaux $F_{A1}$, $F_{A2}$, $F_{A3}$, issus des points $E_{A1}$, $E_{A2}$, $E_{A3}$ liés à l'organe terminal A du robot, les faisceaux $F_{B1}$, $F_{B2}$, $F_{B3}$ issus des points $E_{B1}$, $E_{B2}$, $E_{B3}$ liés à la caméra, et les trajets optiques de formation des images $I_{A1}$, $I_{A2}$, $I_{A3}$, $I_{B1}$, $I_{B2}$, $I_{B3}$ sur la surface sensible 11a de la caméra à partir des taches $T_{A1}$, $T_{A2}$, $T_{A3}$, $T_{B1}$, $T_{B2}$, $T_{B3}$ engendrés sur la surface d'observation 9 par les faisceaux sus-évoqués.

Dans l'exemple décrit, la surface d'observation 9 est plane et perpendiculaire à l'axe optique de la caméra, et les images $I_{B1}$, $I_{B2}$, $I_{B3}$ forment sur la surface sensible un triangle équilatéral.

Comme déjà indiqué, les moyens de traitement d'image 15 fournissent les coordonnées des images $I_{A1}$, $I_{A2}$, $I_{A3}$ dans un repère lié à la surface sensible 11a de la caméra ; ce repère peut par exemple avoir comme origine le centre du triangle équilatéral $I_{B1}$, $I_{B2}$, $I_{B3}$, par lequel passe l'axe optique de la caméra, et comme axes, un axe des abscisses passant par $I_{B3}$ et un axe des ordonnées perpendiculaires à ce dernier (parallèle à $I_{B1}$, $I_{B2}$).

Les moyens de calcul 16 effectuent un calcul de simple triangulation qui, à partir des coordonnées des images $I_{B1}$, $I_{B2}$, $I_{B3}$ dans le repère X, Y, Z, fournit les coordonnées des taches $T_{B1}$, $T_{B2}$, $T_{B3}$ dans le même repère. Ce calcul de triangulation élémentaire consiste à calculer pour chaque tache le point d'intersection du faisceau laser correspondant $F_{B1}$, $F_{B2}$, $F_{B3}$ avec le trajet optique correspondant $I_{B1}C_0$, $I_{B2}C_0$, $I_{B3}C_0$. Dans ce calcul, on utilise les caractéristiques optiques du dispositif de prise de vue (par exemple focale) qui ont été mémorisées dans la mémoire 17.

Les trois points dont les coordonnées ont été ainsi calculées, définissent le plan S de la surface d'observation.

A partir des coordonnées des images $I_{A1}$, $I_{A2}$, $I_{A3}$ dans le repère X, Y, Z, les moyens de calcul 16 fournissent les coordonnées des taches $T_{A1}$, $T_{A2}$, $T_{A3}$ dans ce même repère. Ce calcul de triangulation élémentaire consiste à calculer pour chaque tache le point d'intersection du trajet optique correspondant $I_{A1}C_0$, $I_{A2}C_0$, $I_{A3}C_0$ avec le plan S défini au calcul précédent.

Ensuite, les moyens de calcul 16 effectuent le calcul des coordonnées des sommets de la pyramide $E_{A1}$, $E_{A2}$, $E_{A3}$, P dans un système de référence lié aux taches $T_{A1}$, $T_{A2}$, $T_{A3}$, à partir des coordonnées précédemment obtenues. La figure 11 est une représentation géométrique du calcul effectué (une seule surface $SURF_1$ ayant été représentée).

Ce calcul consiste :

- à calculer une première surface $SURF_1$ constituée par le lieu géométrique des points d'où l'on voit les taches $T_{A2}$, $T_{A3}$ sous l'angle $\alpha$, angle au sommet correspondant de la pyramide ($E_{A2}$, P, $E_{A3}$),
- à calculer une seconde surface $SURF_2$ constituée par le lieu géométrique des points d'où l'on voit les taches $T_{A1}$, $T_{A3}$ sous l'angle $\beta$, angle au sommet correspondant de la pyramide ($E_{A1}$, P, $E_{A3}$),
- à calculer une troisième surface $SURF_3$ constituée par le lieu géométrique des points d'où l'on voit les taches $T_{A1}$, $T_{A2}$ sous l'angle $\gamma$, angle au sommet correspondant de la pyramide ($E_{A1}$, P, $E_{A2}$),
- à calculer les coordonnées du point d'intersection P de ces trois surfaces,
- à en déduire ensuite les coordonnées de chaque point $E_{A1}$, $E_{A2}$ et $E_{A3}$ en calculant la droite correspondante $PT_{A1}$, $PT_{A2}$, $PT_{A3}$ et en ajoutant algébriquement à partir de P la longueur de l'arête correspondante de la pyramide $PE_{A1}$, $PE_{A2}$, $PE_{A3}$ (a, b, c).

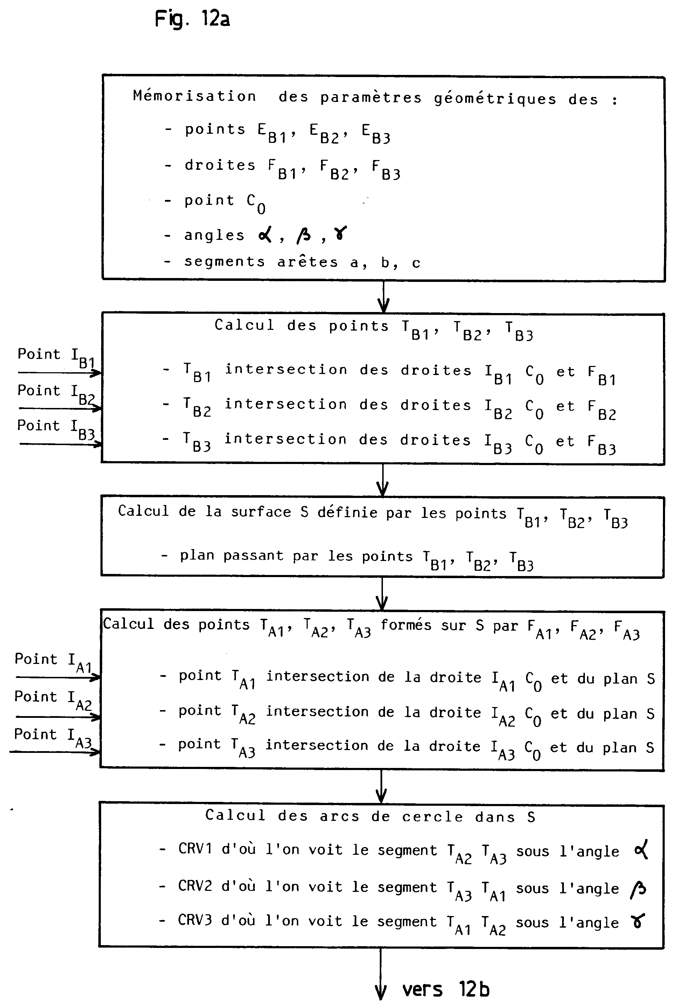

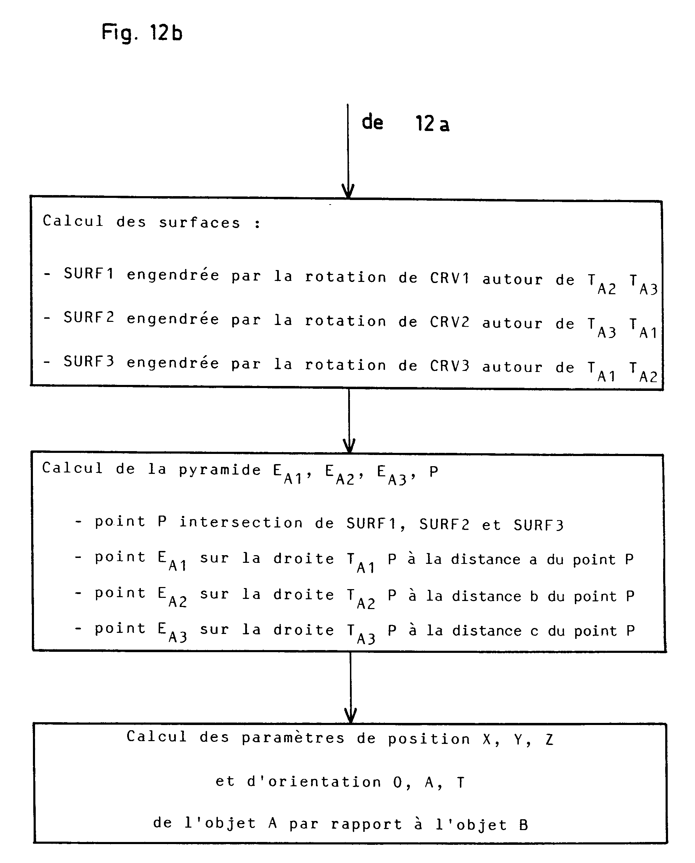

Le logigramme de la figure 12 est un logigramme illustrant les calculs ci-dessus décrits. Dans l'exemple décrit, la pyramide est à base équilatérale et à faces isocèles, de sorte cette symétrie conduit à des calculs simplifiés (a = b = c), les surfaces $SURF_1$, $SURF_2$, $SURF_3$ étant des portions de tores. Dans certaines applications (objet A proche de la surface d'observation), il est possible d'émettre les trois faisceaux $F_{A1}$, $F_{A2}$, $F_{A3}$ selon des directions telles que les angles au sommet $\alpha$, $\beta$, $\gamma$ de la pyramide soient des angles droits, le calcul des surfaces $SURF_1$, $SURF_2$, $SURF_3$ consistant alors à calculer trois sphères de diamètre respectivement égal à $T_{A2}T_{A3}$, $T_{A1}T_{A3}$, $T_{A1}T_{A2}$.

Le calcul final des coordonnées des sommets de la pyramide dans le système de référence désiré lié à l'objet B (socle) est ensuite effectué par des changements successifs de repère.

Les paramètres de position et d'orientation de l'organe terminal A du robot par rapport au socle B sont délivrés vers l'armoire de commande du robot en vue d'adapter la trajectoire de celui-ci en fonction de ces paramètres, par exemple pour atteindre un point déterminé dans l'espace. Ce mode de réalisation est notamment intéressant car il permet le suivi et le contrôle des trajectoires du robot par un système de prise de vue situé en dehors de la zone de travail de celui-ci.

Comme on l'a déjà indiqué, l'identification d'une image pour la rattacher à la tache correspondante peut être effectuée en émettant des faisceaux de caractéristiques fréquentielles différentes et en discriminant les taches correspondantes par un filtrage approprié sur le système de prise de vue. Il est également possible d'effectuer une discrimination séquentielle en émettant seul chaque faisceau et en transmettant pour le traitement de l'image une information d'identification dudit faisceau.

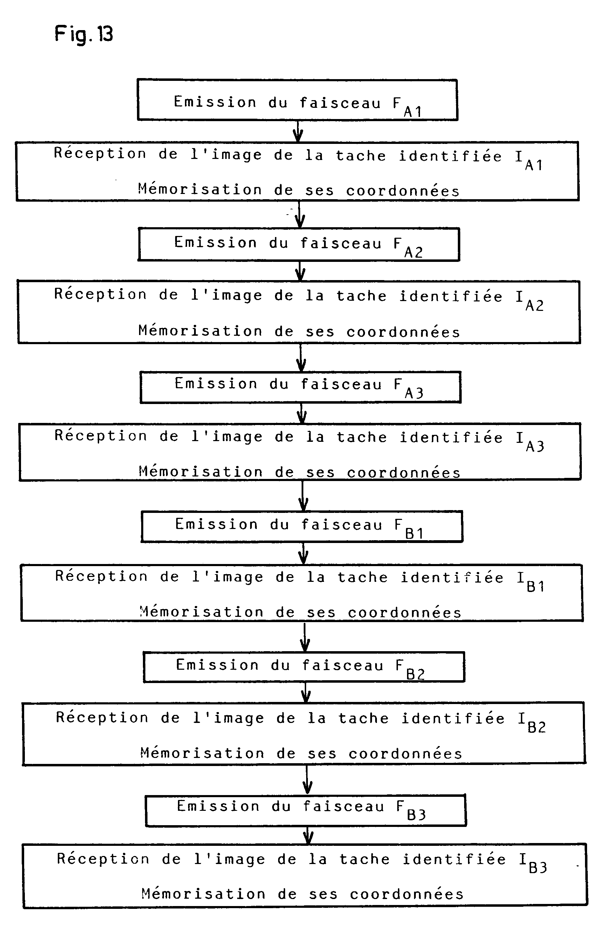

Le logigramme de la figure 13 illustre une telle discrimination séquentielle. Le procédé est mis en oeuvre selon des cycles répétés, chaque cycle consistant :

- à émettre successivement dans le temps les faisceaux lumineux donnant les taches $T_{A1}$, $T_{A2}$, $T_{A3}$, $T_{B1}$, $T_{B2}$, $T_{B3}$,
- à observer chaque tache à l'instant d'émission du faisceau correspondant et à acquérir et mémoriser la position de l'image correspondante $I_{A1}$, $I_{A2}$, $I_{A3}$, $I_{B1}$, $I_{B2}$, $I_{B3}$ avant l'émission du faisceau lumineux suivant,
- après mémorisation de la position de toutes les images, à effectuer les calculs pour obtenir les paramètres de position et d'orientation de l'objet au cours du cycle considéré.

Un autre mode de mise en oeuvre de la discrimination séquentielle des images consiste à émettre de façon cyclique selon une loi préétablie un nombre variable de faisceaux, à observer les images des taches et à identifier par un traitement d'image fonction de la loi préétablie chaque image de tache.

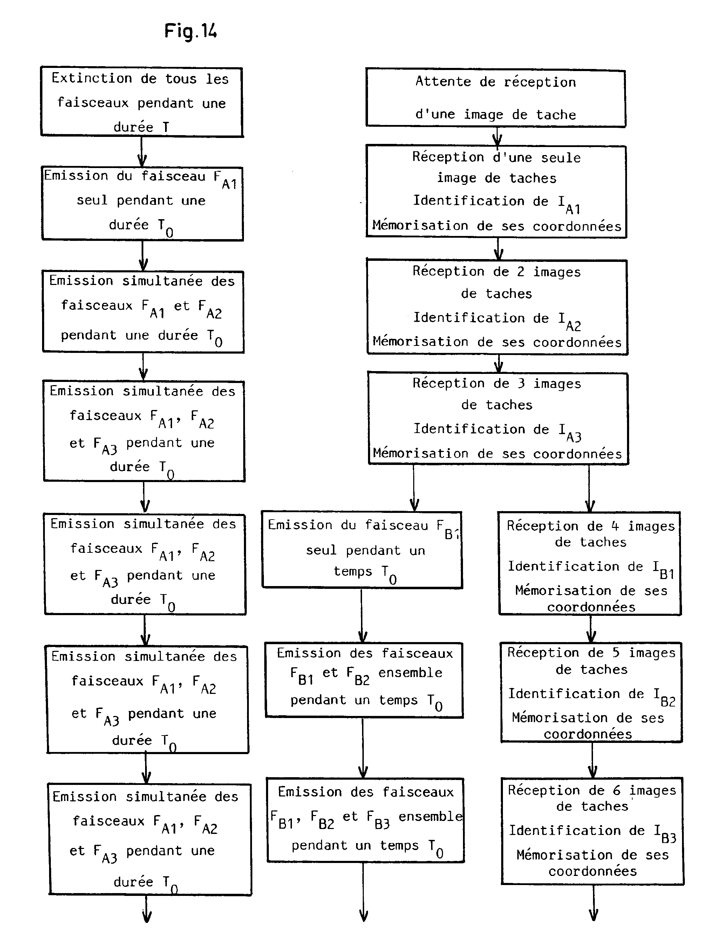

Le logigramme de la figure 14 illustre un tel mode de discrimination qui est mis en oeuvre par cycles répétés, chaque cycle consistant :

- à émettre successivement dans le temps un faisceau lumineux donnant une tache $T_{A1}$, à observer cette tache et à acquérir et mémoriser la position de l'image correspondante $I_{A1}$,
- puis à émettre un autre faisceau en plus du premier donnant une autre tache $T_{A2}$, à observer cette nouvelle tache et à acquérir et mémoriser la position de l'image correspondante $I_{A2}$, et ainsi de suite jusqu'à l'émission des six faisceaux, l'observation de la dernière tache $T_{B3}$ apparue et l'acquisition et la mémorisation de la position de l'image correspondante $I_{B3}$.

Le processus d'identification est donc dans ce cas fondé sur l'apparition d'une nouvelle image de tache.

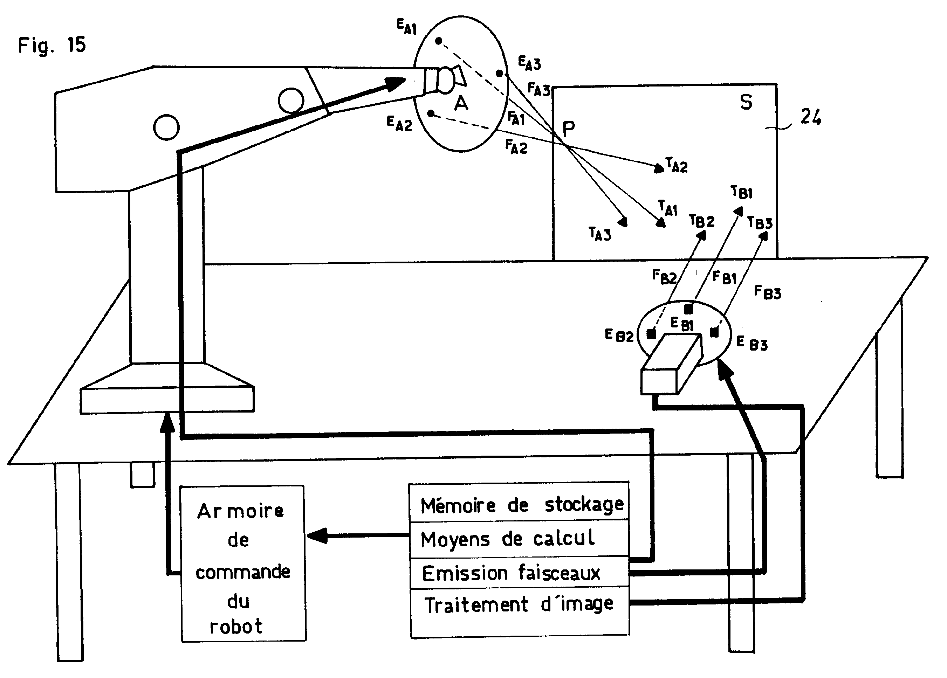

Par ailleurs, la figure 15 illustre un autre mode de réalisation du système. Dans ce mode de réalisation, la surface d'observation 24 est disposée de façon que l'objet A et le système de prise de vue soient d'un même côté de ladite surface d'observation, celle-ci étant constituée par une surface-écran apte à fournir des taches $T_{A1}$, $T_{A2}$, $T_{A3}$ et des taches $T_{B1}$, $T_{B2}$, $T_{B3}$ visibles par le système de prise de vue.

Ce mode de réalisation est compatible avec une surface d'observation non translucide, qui peut être la surface de l'objet que l'on désire saisir avec le robot, le système constituant alors un capteur extéroceptif de vision pour le robot.

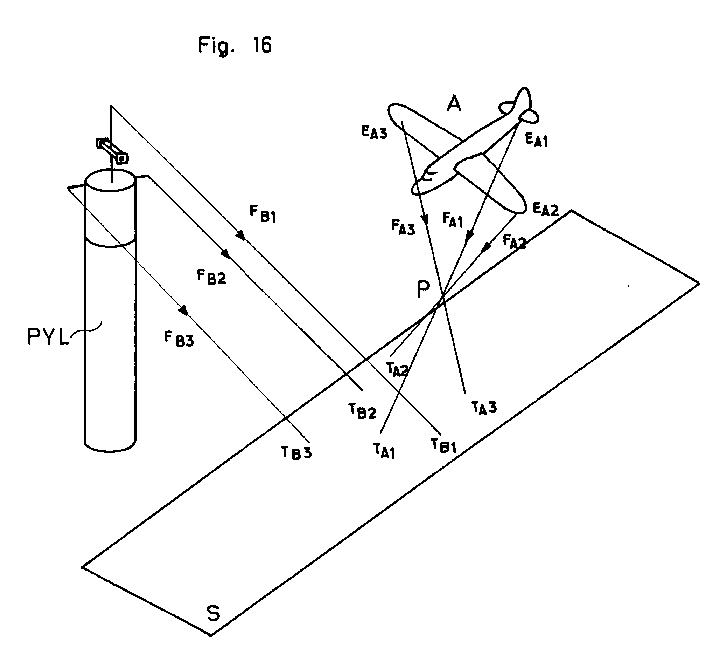

La figure 16 illustre une application du deuxième mode de réalisation ci-dessus décrit, pour définir la position et l'orientation d'un avion par rapport au sol.

Dans ce cas, la surface d'observation est constituée par le sol S. L'objet A est constitué par l'avion et les trois points d'émission $E_{A1}$, $E_{A2}$, $E_{A3}$ sont liés à l'avion, par exemple portés par l'intrados des ailes et de la queue. Les faisceaux émis engendrent des taches $T_{A1}$, $T_{A2}$, $T_{A3}$ sur le sol, et celles-ci sont observées par un système de prise de vue porté par la tour de contrôle ou un pylone PYL, qui émet les faisceaux $F_{B1}$, $F_{B2}$, $F_{B3}$ engendrant sur le sol les taches de référence $T_{B1}$, $T_{B2}$, $T_{B3}$. Il est possible de prévoir plusieurs systèmes de prises de vue et d'émissions de référence afin de prendre en compte l'aéronef dans plusieurs zones au fur et à mesure de son approche.

Ce système de repérage peut également être appliqué au positionnement d'un satellite par rapport à la terre ou d'une autre planète, laquelle constitue une surface d'observation sphérique.

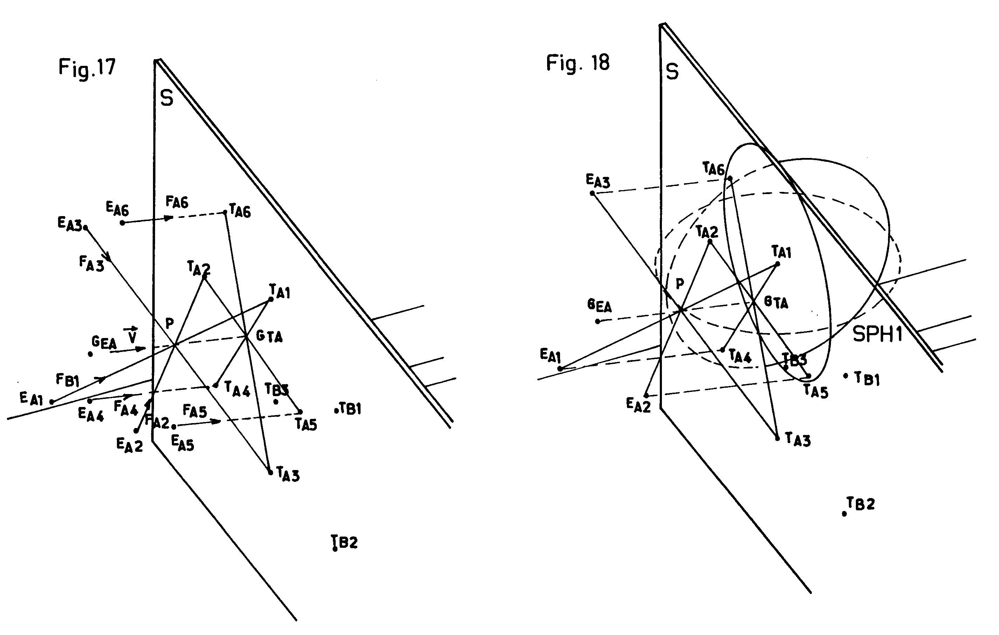

Par ailleurs, les figures 17, 18, 19a et 19b ont trait à une variante de procédé dans laquelle trois nouveaux faisceaux sont émis depuis l'objet A.

Comme précédemment, l'on émet à partir de 3 points $E_{A1}$, $E_{A2}$, $E_{A3}$ liés à l'objet A et non alignés, trois faisceaux lumineux $F_{A1}$, $F_{A2}$, $F_{A3}$ convergeant en un point P extérieur au plan de ces 3 points, de façon à réaliser une pyramide de géométrie prédéterminée, ayant une arête $PE_{A1}$ de longueur a, une arête $PE_{A2}$ de longueur b, et une arête $PA_{A3}$ de longueur c, et un

angle au sommet $(\overrightarrow{PE_{A2}}, \overrightarrow{PE_{A3}}) = \alpha$, un angle au sommet $(\overrightarrow{PE_{A3}}, \overrightarrow{PE_{A1}}) = \beta$ et un angle au sommet $(\overrightarrow{PE_{A1}}, \overrightarrow{PE_{A2}}) = \gamma$

Si $G_{EA}$ est le centre de gravité du triangle $E_{A1}$, $E_{A2}$, $E_{A3}$, le segment de droite $G_{EA}P$ détermine une direction de vecteur directeur $\overrightarrow{V}$.

Dans cette variante, l'on émet à partir de trois points $E_{A4}$, $E_{A5}$, $E_{A6}$ situés sur les droites passant par les points $E_{A1}$, $E_{A2}$, $E_{A3}$ et de vecteur directeur $\overrightarrow{V}$, trois nouveaux faisceaux lumineux $F_{B4}$, $F_{B5}$, $F_{B6}$, parallèles entre eux et de direction et sens $\overrightarrow{V}$.

Les faisceaux $F_{A1}$, $F_{A2}$, $F_{A3}$ créent sur la surface d'observation S, trois taches $T_{A1}$, $T_{A2}$, $T_{A3}$.

Les faisceaux $F_{A4}$, $F_{A5}$, $F_{A6}$ créent sur la surface d'observation S, trois taches d'appoint $T_{A4}$, $T_{A5}$, $T_{A6}$.

La connaissance des 6 taches $T_{A1}$, $T_{A2}$, $T_{A3}$, $T_{A4}$, $T_{A5}$, $T_{A6}$ sur la surface S permet de déterminer les points P, puis $E_{A1}$, $E_{A2}$, $E_{A3}$ donc la position et l'orientation de l'objet A par rapport à la surface S. La surface S connue à l'aide des taches $T_{B1}$, $T_{B2}$, $T_{B3}$, par rapport à l'objet B, est observée par le dispositif de prise de vue qui donne des images $I_{A1}$, $I_{A2}$, $I_{A3}$ $I_{A4}$, $I_{A5}$, $I_{A6}$.

Le calcul permet de déterminer la position et l'orientation de l'objet A par rapport à l'objet B.

En effet, le point $G_{TA}$, centre de gravité du triangle $T_{A4}$, $T_{A5}$, $T_{A6}$ est à l'intersection des droites $T_{A1}T_{A4}$, $T_{A2}T_{A5}$, et $T_{A3}T_{A6}$.

Dans le triangle $T_{A1}E_{A1}T_{A4}$, le segment $PG_{TA}$ est parallèle à $E_{A1}T_{A4}$.

Soit :

longueur $PT_{A1} = x_1$ inconnue à calculer

longueur $PE_{A1} = a$ connue et mémorisée

longueur $G_{TA}T_{A1} = d_1$ calculée à partir des coordonnées de $G_{TA}$ et $T_{A1}$

longueur $G_{TA}T_{A4} = d_4$ calculée à partir des coordonnées $G_{TA}$ et $T_{A2}$

le théorème de Thalès donne :

$$\frac{x_1}{a} = \frac{d_1}{d_4}$$

donc

$$x_1 = a \times \frac{d_1}{d_4}$$

Donc le point P est à la distance $x_1$ du point $T_{A1}$. Ce point est donc sur la sphère SPH1 de centre $T_{A1}$ et de rayon $x_1$.

La figure 18 est une représentation géométrique illustrant ce calcul.

Le point P est de la même façon sur des sphères similaires SPH2, SPH3 et se définit donc à l'intersection de ces 3 sphères SPH1, SPH2, SPH3.

De plus, comme précédemment, le point $E_{A1}$ est sur la droite $T_{A1}P$ à distance $\underline{a}$ du point P.

Le point $E_{A2}$ est sur la droite $T_{A2}P$ à distance $\underline{b}$ du point P.

Le point $E_{A3}$ est sur la droite $T_{A3}P$ à distance $\underline{c}$ du point P.

La suite du calcul est semblable à celle déjà définie.

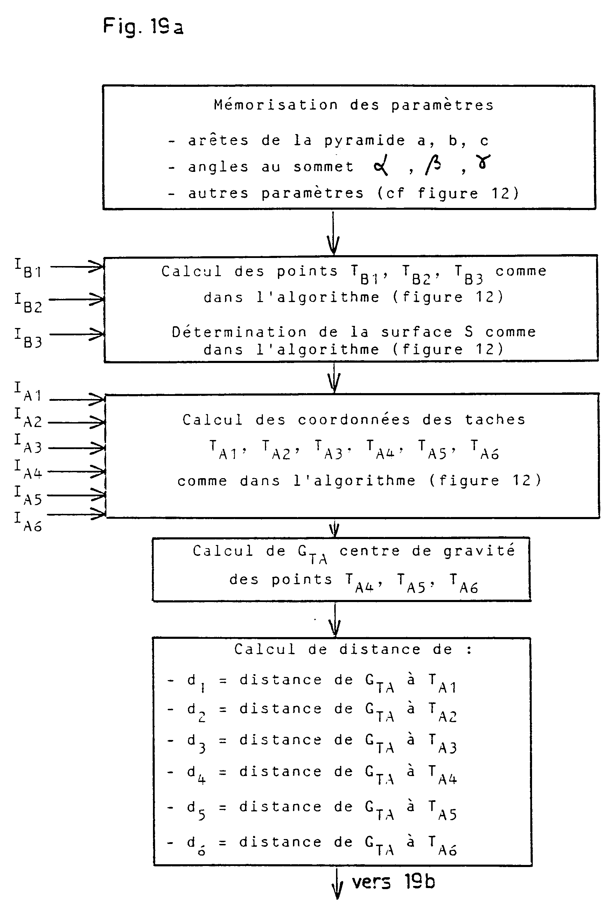

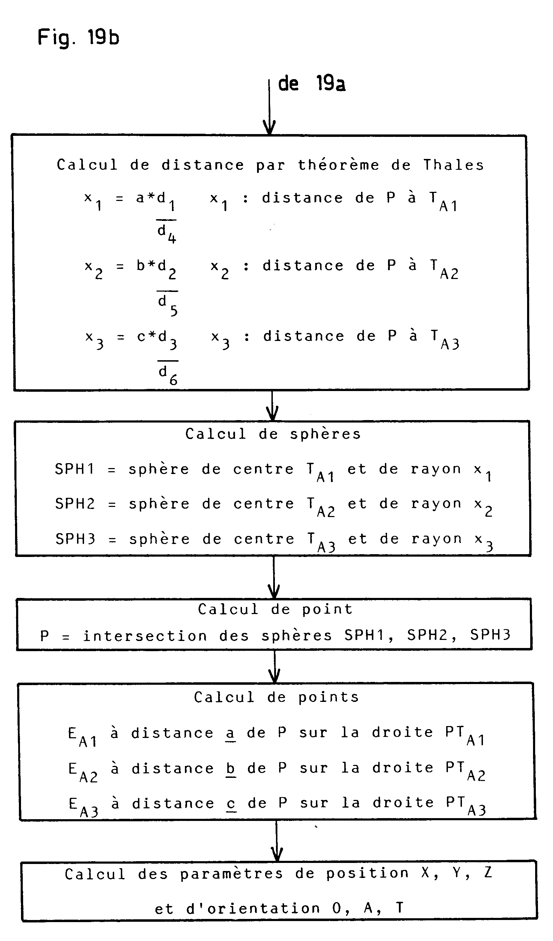

L'ensemble de l'algorithme de calcul est fourni aux figures 19a et 19b.

## Revendications

1. Procédé de détermination de paramètres de position et d'orientation relatives dans l'espace d'un objet A par rapport à un autre objet B, caractérisé en ce qu'il consiste :

(a) à émettre à partir de trois points $E_{A1}$, $E_{A2}$, $E_{A3}$ liés à l'objet A et non alignés, trois faisceaux lumineux $F_{A1}$, $F_{A2}$, $F_{A3}$ convergeant en un point P extérieur au plan des trois points, de façon à réaliser une pyramide de géométrie prédéterminée,

(b) à mémoriser les caractéristiques géométriques de ladite pyramide,

(c) à disposer une surface d'observation S de géométrie connue telle que les faisceaux lumineux $F_{A1}$, $F_{A2}$, $F_{A3}$ soient sécants avec ladite surface et engendrent sur celle-ci trois taches lumineuses $T_{A1}$, $T_{A2}$, $T_{A3}$,

(d) à mémoriser les caractéristiques géométriques de la surface d'observation,

(e) à émettre à partir de trois points $E_{B1}$, $E_{B2}$, $E_{B3}$, liés à l'objet B et non alignés, trois faisceaux lumineux $F_{B1}$, $F_{B2}$, $F_{B3}$ de caractéristiques géométriques prédéterminées de façon à engendrer sur ou à travers la surface d'observation trois taches ou images, désignées taches $T_{B1}$, $T_{B2}$, $T_{B3}$,

(f) à mémoriser les caractéristiques géométriques des faisceaux $F_{B1}$, $F_{B2}$, $F_{B2}$,

(g) à observer la surface d'observation S au moyen d'un dispositif de prise de vue (11) de caractéristiques prédéterminées ayant une surface sensible (11a), ce dispositif étant lié à l'objet B et adapté pour engendrer des images $I_{A1}$, $I_{A2}$, $I_{A3}$ des taches $T_{A1}$, $T_{A2}$, $T_{A3}$ et des images $I_{B1}$, $I_{B2}$, $I_{B3}$ des taches $T_{B1}$, $T_{B2}$, $T_{B3}$,

(h) à mémoriser les caractéristiques du dispositif de prise de vue,

(i) à effectuer un traitement d'image en vue de calculer, à partir de la position des images précitées les coordonnées des images $I_{A1}$, $I_{A2}$, $I_{A3}$ dans un repère lié à la surface sensible (11a) du dispositif de prise de vue,

(j) à calculer à partir desdites coordonnées, des caractéristiques du dispositif de prise de vue, de la pyramide $E_{A1}$, $E_{A2}$, $E_{A3}$, P, de la surface d'observation et des faisceaux $F_{B1}$, $F_{B2}$, $F_{B3}$, les coordonnées des sommets de ladite pyramide dans un système de référence lié à l'objet B,

(k) et à en déduire les paramètres de position et d'orientation de l'objet A par rapport à l'objet B.

2.  Procédé selon la revendication 1, caractérisé en ce que (j) le calcul des coordonnées des sommets de la pyramide dans un système de référence lié à l'objet B consiste :

    ($j_1$) à calculer les coordonnées des sommets de la pyramide dans un système de référence lié aux taches $T_{A1}$, $T_{A2}$, $T_{A3}$ à partir des paramètres géométriques de la pyramide,

    ($j_2$) à calculer les coordonnées des taches $T_{B1}$, $T_{B2}$, $T_{B3}$ dans un système de référence lié à l'objet B à partir des caractéristiques du dispositif de prise de vue et des caractéristiques géométriques des faisceaux $F_{B1}$, $F_{B2}$, $F_{B3}$,

    ($j_3$) à calculer les coordonnées des taches $T_{A1}$, $T_{A2}$, $T_{A3}$ dans un système de référence lié à l'objet B à partir des résultats des coordonnées des images $I_{A1}$, $I_{A2}$, $I_{A3}$,

($j_4$) et à calculer les coordonnées de la pyramide $E_{A1}$, $E_{A2}$, $E_{A3}$ dans le système de référence lié à l'objet B à partir des résultats des calculs ($i_1$), ($i_2$) et ($i_3$).

3.  Procédé selon la revendication 2, caractérisé en ce que ($j_1$) le calcul des coordonnées des sommets de la pyramide $E_{A1}$, $E_{A2}$, $E_{A3}$, P dans un système de référence lié aux taches $T_{A1}$, $T_{A2}$, $T_{A3}$ consiste :

    - à calculer une première surface $SURF_1$ constituée par le lieu géométrique des points d'où l'on voit les taches $T_{A2}$, $T_{A3}$ sous l'angle α , angle au sommet correspondant de la pyramide ($E_{A2}$, P, $E_{A3}$),
    - à calculer une seconde surface $SURF_2$ constituée par le lieu géométrique des points d'où l'on voit les taches $T_{A1}$, $T_{A3}$ sous l'angle β , angle au sommet correspondant de la pyramide ($E_{A1}$, P, $E_{A3}$),
    - à calculer une troisième surface $SURF_3$ constituée par le lieu géométrique des points d'où l'on voit les taches $T_{A1}$, $T_{A2}$ sous l'angle γ , angle au sommet correspondant de la pyramide ($E_{A1}$, P, $E_{A2}$),
    - à calculer les coordonnées du point d'intersection P de ces trois surfaces,
    - à en déduire ensuite les coordonnées de chaque point $E_{A1}$, $E_{A2}$ et $E_{A3}$ en calculant la droite correspondante $PT_{A1}$, $PT_{A2}$, $PT_{A3}$ et en ajoutant algébriquement à partir de P la longueur de l'arête correspondante de la pyramide ($a = PE_{A1}$, $b = PE_{A2}$, $c = PE_{A3}$).

4.  Procédé selon l'une des revendications 2 ou 3, caractérisé en ce que l'on observe la surface d'observation S avec un dispositif de prise de vue de centre optique $C_0$, et en ce que ($j_2$) le calcul des coordonnées des taches $T_{B1}$, $T_{B2}$, $T_{B3}$ dans un système de référence lié à l'objet B consiste :

    - à déterminer la tache $T_{B1}$ comme étant à l'intersection du faisceau $F_{B1}$ et du trajet optique $I_{B1}C_0$,
    - à déterminer la tache $T_{B2}$ comme étant à l'intersection du faisceau $F_{B2}$ et du trajet optique $I_{B2}C_0$,
    - à déterminer la tache $T_{B3}$ comme étant à l'intersection du faisceau $F_{B3}$ et du trajet optique $I_{B3}C_0$,
    - à en déduire les coordonnées des taches $T_{B1}$, $T_{B2}$, $T_{B3}$ dans un système de référence lié au plan image du dispositif de prise de vue donc à l'objet B.

5.  Procédé selon la revendication 4, caractérisé en ce que ($j_3$) le calcul des coordonnées des taches $T_{A1}$, $T_{A2}$, $T_{A3}$ dans un système lié à l'objet B consiste :

- à déterminer la tache $T_{A1}$ comme étant l'intersection du trajet optique $F_{A1}C_0$ avec la surface d'observation,
- à déterminer la tache $T_{A2}$ comme étant l'intersection du trajet optique $F_{A2}C_0$ avec la surface d'observation,
- à déterminer la tache $T_{A3}$ comme étant l'intersection du trajet optique $F_{A3}C_0$ avec la surface d'observation,
- et à déduire les coordonnées des taches $T_{A1}$, $T_{A2}$, $T_{A3}$ dans un repère lié à la surface sensible (11a) du dispositif de prise de vue.

6. Procédé selon l'une des revendications 2, 3, 4 ou 5, caractérisé en ce que ($j_4$) le calcul final des coordonnées des sommets de la pyramide $E_{A1}$, $E_{A2}$, $E_{A3}$ dans le système de référence lié à l'objet B est effectué par des changements successifs de repères.

7. Procédé selon l'une des revendications 1 à 6, caractérisé en ce que l'on dispose la surface d'observation de façon que l'objet A et le dispositif de prise de vue soient d'un même côté de ladite surface d'observation, celle-ci étant constituée par une surface-écran (24) apte à fournir les taches $T_{A1}$, $T_{A2}$, $T_{A3}$ et les taches $T_{B1}$, $T_{B2}$, $T_{B3}$ visibles par le dispositif de prise de vue.

8. Procédé selon l'une des revendications 1 à 6, caractérisé en ce que l'on dispose la surface d'observation entre l'objet A et le dispositif de prise de vue, ladite surface d'observation étant constituée par une surface translucide (9) en vue de fournir les taches $T_{A1}$, $T_{A2}$, $T_{A3}$ sous forme d'images visibles du côté du dispositif de prise de vue et des taches $T_{B1}$, $T_{B2}$, $T_{B3}$ également visibles par le dispositif de prise de vue.

9. Procédé selon la revendication 3, caractérisé en ce que l'on émet les trois faisceaux $F_{A1}$, $F_{A2}$, $F_{A3}$ selon des directions telles que les angles au sommet $\alpha$, $\beta$, $\gamma$ de la pyramide soient des angles droits, le calcul des surfaces $SURF_1$, $SURF_2$, $SURF_3$ consistant à calculer trois sphères de diamètre respectivement égal à $T_{A2}T_{A3}$, $T_{A1}T_{A3}$, $T_{A1}T_{A2}$.

10. Procédé selon la revendication 9, caractérisé en ce que (a) l'on émet les trois faisceaux convergents à partir de trois points $E_{A1}$, $E_{A2}$, $E_{A3}$ formant un triangle équilatéral, selon des directions telles que la pyramide à base équilatérale formée par ces faisceaux ait comme autres faces des triangles isocèles.

11. Procédé selon l'une des revendications précédentes, caractérisé en ce que :

(c) l'on met en place une surface d'observation plane,

(e) l'on émet les trois faisceaux $F_{B1}$, $F_{B2}$, $F_{B3}$ parallèlement entre eux et perpendiculairement à la surface d'observation,

(g) l'on positionne le dispositif de prise de vue, de sorte que son axe optique soit aligné avec la direction des faisceaux $F_{B1}$, $F_{B2}$, $F_{B3}$.

12. Procédé selon l'une des revendications précédentes, caractérisé en ce que le dispositif de prise de vue est lié à la surface d'observation.

13. Procédé selon l'une des revendications 1 à 12, caractérisé en ce que l'on discrimine chaque image des taches en émettant seul le faisceau correspondant et en transmettant pour le traitement de l'image une information d'identification dudit faisceau.

14. Procédé selon la revendication 13, caractérisé en ce qu'il est mis en oeuvre par cycles répétés en vue d'une détermination séquentielle des paramètres, chaque cycle consistant :
- à émettre successivement dans le temps les faisceaux lumineux donnant les taches $T_{A1}$, $T_{A2}$, $T_{A3}$, $T_{B1}$, $T_{B2}$, $T_{B3}$,
- à observer chaque tache à l'instant d'émission du faisceau correspondant et à acquérir et mémoriser la position de l'image correspondante $I_{A1}$, $I_{A2}$, $I_{A3}$, $I_{B1}$, $I_{B2}$, $I_{B3}$ avant l'émission du faisceau lumineux suivant,
- après mémorisation de la position de toutes les images, à effectuer les calculs pour obtenir les paramètres de position et d'orientation de l'objet au cours du cycle considéré.

15. Procédé selon l'une des revendications 1 à 12, caractérisé en ce que l'on discrimine chaque image des taches en émettant de façon cyclique selon une loi préétablie un nombre variable de faisceaux, en observant les images des taches et en identifiant par un traitement d'image fonction de la loi préétablie chaque image de tache.

16. Procédé selon la revendication 15, caractérisé en ce qu'il est mis en oeuvre par cycles répétés en vue d'une détermination séquentielle des paramètres, chaque cycle consistant :
- à émettre successivement dans le temps un faisceau lumineux donnant une tache $T_{A1}$, à observer cette tache et à acquérir et mémoriser la position de l'image correspondante $I_{A1}$,
- puis à émettre un autre faisceau en plus du premier donnant une autre tache $T_{A2}$, à observer cette nouvelle tache et à acquérir et

mémoriser la position de l'image correspondante $I_{A2}$, et ainsi de suite jusqu'à l'émission des six faisceaux, l'observation de la dernière tache $T_{B3}$ apparue et l'acquisition et la mémorisation de la position de l'image correspondante $I_{B3}$.

17. Procédé selon l'une des revendications 1 à 12, caractérisé en ce que l'on émet des faisceaux de caractéristiques fréquentielles différentes et que l'on discrimine les taches correspondantes par filtrage approprié sur le dispositif de prise de vue.

18. Procédé selon l'une des revendications précédentes, dans lequel :

(g) l'on observe la surface d'observation au moyen d'un dispositif de prise de vue à balayage fournissant une image vidéo de ladite surface,

(i) le traitement d'image consiste à déterminer, dans chaque trame de l'image vidéo, la ligne et la colonne du centre de gravité de l'image de chaque tache.

19. Procédé selon la revendication 1, caractérisé en ce que :

(l) l'on émet à partir de trois points $E_{A4}$, $E_{A5}$, $E_{A6}$ liés à l'objet A, trois nouveaux faisceaux lumineux, parallèles entre eux, en vue d'engendrer sur la surface d'observations trois nouvelles taches $T_{A4}$, $T_{A5}$, $T_{A6}$, dites taches d'appoint,

(g') (i') l'on observe la surface d'observation au moyen du dispositif de prise de vue, de façon à engendrer des images desdites taches d'appoint $I_{A4}$, $I_{A5}$, $I_{A6}$ et l'on calcule leurs coordonnées dans le repère lié à la surface sensible par un traitement d'image analogue à celui mis en oeuvre pour les taches $T_{A1}$, $T_{A2}$, $T_{A3}$,

(j) . l'on calcule les coordonnées du sommet P de la pyramide en calculant trois rayons de sphère $T_{A1}P$, $T_{A2}P$, $T_{A3}P$ par triangulation à partir des coordonnées des taches $T_{A1}$, $T_{A2}$, $T_{A3}$ et des taches d'appoint $T_{A4}$, $T_{A5}$, $T_{A6}$ et en calculant les coordonnées du point P d'intersection de ces sphères centrées sur la tache correspondante $T_{A1}$, $T_{A2}$ ou $T_{A3}$,

. l'on calcule les coordonnées des points $E_{A1}$, $E_{A2}$ et $E_{A3}$ en calculant la droite correspondante $PT_{A1}$, $PT_{A2}$ ou $PT_{A3}$ et en ajoutant algébriquement à partir de P la longueur de l'arête correspondante de la pyramide.

20. Système de détermination des paramètres de position et d'orientation d'un objet A relativement à un objet B dans l'espace, en vue de la mise en oeuvre du procédé conforme à la revendication 8, caractérisé en ce qu'il comprend :
- trois organes d'émission lumineuse (3), dits organes d'émission A, assujettis à un premier châssis (1) et adaptés pour émettre des faisceaux convergents, ledit premier châssis étant équipé de moyens de fixation (1b) sur l'objet A,
- une surface d'observation translucide (9) placée sur le trajet des faisceaux et assujettie sur un deuxième châssis (10),
- un dispositif de prise de vue (11) assujetti sur un troisième châssis (12) et agencé en regard de la surface d'observation à l'opposé des trois organes d'émission A, ledit dispositif de prise de vue étant doté de moyens d'acquisition en vue de délivrer des signaux représentatifs de la position des images captées,
- trois organes d'émission lumineuse (13), dits organes d'émission B, solidaires du dispositif de prise de vue et adaptés pour émettre des faisceaux vers la surface d'observation,
- des moyens (14) de commande des organes d'émission lumineuse en vue de déclencher les émissions de faisceaux à des instants prédéterminés,
- une mémoire (17) de stockage des caractéristiques géométriques et optiques des faisceaux et système de prise de vue,
- des moyens (15) de traitement d'image adaptés pour traiter les signaux issus des moyens d'acquisition du dispositif de prise de vue,
- et des moyens de calcul (16) agencés pour recevoir les signaux issus des moyens de traitement d'image et les paramètres contenus dans la mémoire de stockage et programmés pour calculer et délivrer les paramètres de position et d'orientation de l'objet A par rapport à l'objet B.

21. Système de détermination des paramètres de position et d'orientation d'un objet A relativement à un objet B dans l'espace, en vue de la mise en oeuvre du procédé conforme à la revendication 7, caractérisé en ce qu'il comprend :
- trois organes d'émission lumineuse, dits organes d'émission A, assujettis à un premier châssis et adaptés pour émettre des faisceaux convergents, ledit premier châssis étant équipé de moyens de fixation sur l'objet A,
- une surface d'observation placée sur le trajet des faisceaux et assujettie sur un deuxième châssis, ladite surface étant constituée par une surface-écran (24) apte à engendrer des taches sur sa face située du côté des trois organes d'émission A,

- un dispositif de prise de vue assujetti sur un troisième châssis et agencé en regard de la surface-écran du même côté que les trois organes d'émission A, ledit dispositif de prise de vue étant doté de moyens d'acquisition en vue de délivrer des signaux représentatifs de la position des images captées,

- trois organes d'émission lumineuse, dits organes d'émission B, solidaires du dispositif de prise de vue et adaptés pour émettre des faisceaux vers la surface d'observation,

- des moyens de commande des organes d'émission lumineuse en vue de déclencher les émissions de faisceaux à des instants prédéterminés,

- une mémoire de stockage des caractéristiques géométriques et optiques des faisceaux et système de prise de vue,

- des moyens de traitement d'images adaptés pour traiter les signaux issus des moyens d'acquisition du système de prise de vue,

- et des moyens de calcul agencés pour recevoir les signaux issus des moyens de traitement d'image et les paramètres contenus dans la mémoire de stockage et programmés pour calculer et délivrer les paramètres de position et d'orientation de l'objet A relativement à l'objet B.

22. Système selon l'une des revendications 20 ou 21, dans lequel les organes d'émission lumineuse (3, 13) sont constitués par des diodes lasers (8) associées à un système optique de focalisation (4).

23. Système selon la revendication 22, dans lequel le dispositif de prise de vue est une caméra vidéo (11) sensible à la longueur d'onde des diodes laser (8).

24. Système selon la revendication 23, dans lequel les moyens de traitement d'image (15) comprennent un comparateur (18) recevant le signal vidéo en vue de détecter chaque image de tache, un extracteur de synchronisation (19) délivrant des signaux d'horloge, des compteurs d'abscisse (20), d'ordonnée (21), et de longueur de tache (22) et un automate de calcul (23) en vue de déterminer la position du centre de gravité de l'image de la tache à partir des valeurs des compteurs.

25. Système selon l'une des revendications 20, 21, 22, 23 ou 24, dans lequel les moyens de calcul (16) comprennent un calculateur programmé par un logiciel correspondant au logigramme des figures 12a et 12b.

**Patentansprüche**

1. Verfahren zur Bestimmung von relativen Parametern der Position und Orientierung im Raum eines Objektes A im Verhältnis zu einem anderen Objekt B, dadurch gekennzeichnet, daß es darin besteht:

(a) von drei mit dem Objekt A in Verbindung stehenden und nicht ausgerichteten Punkten $E_{A1}$, $E_{A2}$, $E_{A3}$ ausgehend drei Lichtstrahlen $F_{A1}$, $F_{A2}$, $F_{A3}$ zu emittieren, die in einem außerhalb der Ebene der drei Punkte gelegenen Punkt P zusammentreffen, so daß eine Pyramide vorbestimmter Geometrie entsteht,

(b) die geometrischen Kennzeichen der besagten Pyramide zu speichern,

(c) eine Beobachtungsfläche S bekannter Geometrie so anzuordnen, daß die Lichtstrahlen $F_{A1}$, $F_{A2}$, $F_{A3}$ die besagte Fläche schneiden und auf dieser drei Lichtflecke $T_{A1}$, $T_{A2}$, $T_{A3}$ erzeugen,

(d) die geometrischen Merkmale der Beobachtungsfläche zu speichern,

(e) von drei mit dem Objekt B in Verbindung stehenden und nicht ausgerichteten Punkten $E_{B1}$, $E_{B2}$, $E_{B3}$ ausgehend drei Lichtstrahlen $F_{B1}$, $F_{B2}$, $F_{B3}$ mit vorbestimmten geometrischen Merkmalen zu emittieren, um auf der Beobachtungsfläche oder durch diese hindurch drei Flecke bzw. Bilder zu erzeugen, die als die Flecke $T_{B1}$, $T_{B2}$, $T_{B3}$ bezeichnet sind,

(f) die geometrischen Merkmale der Strahlen $F_{B1}$, $F_{B2}$, $F_{B3}$ zu speichern,

(g) die Beobachtungsfläche S mit Hilfe eines Bildaufnahmegeräts (11) mit vorbestimmten Merkmalen und mit einer empfindlichen Oberfläche (11a) zu beobachten, wobei das besagte Gerät mit dem Objekt B in Verbindung steht und so beschaffen ist, daß es Bilder $I_{A1}$, $I_{A2}$, $I_{A3}$ der Flecke $T_{A1}$, $T_{A2}$, $T_{A3}$ und Bilder $I_{B1}$, $I_{B2}$, $I_{B3}$ der Flecke $T_{B1}$, $T_{B2}$, $T_{B3}$ erzeugt,

(h) die Kennzeichen des Bildaufnahmegeräts zu speichern,

(i) eine Bildbearbeitung vorzunehmen, um von der Position der vorstehend genannten Bilder ausgehend die Koordinaten der Bilder $I_{A1}$, $I_{A2}$, $I_{A3}$ in einem mit der empfindlichen Oberfläche (11a) des Bildaufnahmegeräts in Verbindung stehenden Bezugsnetz zu berechnen,

(j) im Berechnen, ausgehend von den besagten Koordinaten und den Merkmalen des Bildaufnahmegeräts, der Pyramide $E_{A1}$, $E_{A2}$, $E_{A3}$, P, der Beobachtungsfläche und der Strahlen $F_{B1}$, $F_{B2}$, $F_{B3}$, der Spitzenkoordinaten der besagten Pyramide in einem mit dem Objekt B in Verbindung stehenden Bezugssystem,

(k) im Ableiten davon der Parameter der Position und Orientierung des Objektes A im Verhältnis zu dem Objekt B.

2. Verfahren nach Anspruch 1, dadurch gekennzeichnet, daß (j) die Berechnung der Koordinaten der Pyramidenspitzen in einem mit dem Objekt B in Verbindung stehenden Bezugssystem darin besteht:

(j₁) die Koordinaten der Pyramidenspitzen in einem mit den Flecken $T_{A1}$, $T_{A2}$, $T_{A3}$ in Verbindung stehenden Bezugssystem von den geometrischen Parametern der Pyramide ausgehend zu berechnen,

(j₂) die Koordinaten der Flächen $T_{B1}$, $T_{B2}$, $T_{B3}$ in einem mit dem Objekt B in Verbindung stehenden Bezugssystem von den Kennzeichen des Bildaufnahmegeräts und den geometrischen Merkmalen der Strahlen $F_{B1}$, $F_{B2}$, $F_{B3}$ ausgehend zu berechnen,

(j₃) die Koordinaten der Flecke $T_{A1}$, $T_{A2}$, $T_{A3}$ in einem mit dem Objekt B in Verbindung stehenden Bezugssystem von den bestimmten Werten der Koordinaten der Bilder $I_{A1}$, $I_{A2}$, $I_{A3}$ ausgehend zu berechnen,

(j₄) und die Koordinaten der Pyramide $B_{A1}$, $E_{A2}$, $E_{A3}$ in dem mit dem Objekt B in Verbindung stehenden Bezugssystem von den Ergebnissen der Berechnungen (j₁), (j₂) und (j₃) ausgehend zu berechnen.

3. Verfahren nach Anspruch 2, dadurch gekennzeichnet, daß (j₁), die Berechnung der Koordinaten der Pyramidenspitzen $E_{A1}$, $E_{A2}$, $E_{A3}$, P in einem mit den Flecken $T_{A1}$, $T_{A2}$, $T_{A3}$ in Verbindung stehenden Bezugssystem darin besteht:

- eine erste Oberfläche $SURF_1$ zu berechnen, die durch den geometrischen Ort der Punkte gebildet wird, von denen aus die Flecke $T_{A2}$, $T_{A3}$ unter dem Winkel $\alpha$, dem entsprechenden Spitzenwinkel ($E_{A2}$, P, $E_{A3}$) der Pyramide, sichtbar sind,
- eine zweite Oberfläche $SURF_2$ zu berechnen, die durch den geometrischen Ort der Punkte gebildet wird, von denen aus die Flecke $T_{A1}$, $T_{A3}$ unter dem Winkel $\beta$, dem entsprechenden Spitzenwinkel ($E_{A1}$, P, $E_{A3}$) der Pyramide, sichtbar sind,
- eine dritte Oberfläche $SURF_3$ zu berechnen, die durch den geometrischen Ort der Punkte gebildet wird, von denen aus die Flecke $T_{A1}$, $T_{A2}$ unter dem Winkel $\gamma$, dem entsprechenden Spitzenwinkel ($E_{A1}$, P, $E_{A2}$) der Pyramide, sichtbar sind,
- die Koordinaten des Schnittpunkts P dieser drei Oberflächen zu berechnen,
- danach die Koordinaten jedes der Punkte $E_{A1}$, $E_{A2}$ und $E_{A3}$ abzuleiten, indem die entsprechende Gerade $PT_{A1}$, $PT_{A2}$, $PT_{A3}$ berechnet und die Länge der entsprechenden Pyramidenkante (a = $PE_{A1}$, b = $PE_{A2}$, c = $PE_{A3}$) algebraisch von dem Punkte P ausgehend hinzuaddiert wird.

4. Verfahren nach einem der Ansprüche 2 oder 3, dadurch gekennzeichnet, daß man die Beobachtungsfläche S mit einem Bildaufnahmegerät mit dem optischen Mittelpunkt $C_o$ beobachtet, sowie dadurch, daß (j₂) die Berechnung der Koordinaten der Flecke $T_{B1}$, $T_{B2}$, $T_{B3}$ in einem mit dem Objekt B in Verbindung stehenden Bezugssystem darin besteht:

- den Fleck $T_{B1}$ als an der Schnittstelle des Strahls $F_{B1}$ mit dem optischen Pfad $I_{B1}C_o$ liegend zu bestimmen,
- den Fleck $T_{B2}$ als an der Schnittstelle des Strahls $F_{B2}$ mit dem optischen Pfad $I_{B2}C_o$ liegend zu bestimmen,
- den Fleck $T_{B3}$ als an der Schnittstelle des Strahls $F_{B3}$ mit dem optischen Pfad $I_{B3}C_o$ liegend zu bestimmen,
- daraus die Koordinaten der Flecke $T_{B1}$, $T_{B2}$, $T_{B3}$ in einem mit der Bildebene des Bildaufnahmegeräts und somit dem Objekt B liegenden Bezugssystem abzuleiten.

5. Verfahren nach Anspruch 4, dadurch gekennzeichnet, daß (j₃) die Berechnung der Koordinaten der Flecke $T_{A1}$, $T_{A2}$, $T_{A3}$ an einem mit dem Objekt B in Verbindung stehenden System darin besteht:

- den Fleck $T_{A1}$ als an der Schnittstelle des optischen Pfades $F_{A1}C_o$ mit der Beobachtungsfläche liegend zu bestimmen,
- den Fleck $T_{A2}$ als an der Schnittstelle des optischen Pfades $F_{A2}C_o$ mit der Beobachtungsfläche liegend zu bestimmen,
- den Fleck $T_{A3}$ als an der Schnittstelle des optischen Pfades $F_{A3} C_o$ mit der Beobachtungsfläche liegend zu bestimmen,
- und daraus die Koordinaten der Flecke $T_{A1}$, $T_{A2}$, $T_{A3}$ in einem mit der empfindlichen Oberfläche (11a) des Bildaufnahmegeräts in Verbindung stehenden Bezugsnetz abzuleiten.

6. Verfahren nach einem der Ansprüche 2, 3, 4 oder 5, dadurch gekennzeichnet, daß (j₄) die Endberechnung der Koordinaten der Pyramidenspitzen $E_{A1}$, $E_{A2}$, $E_{A3}$ in dem mit dem Objekt B in Verbindung stehenden Bezugssystem durch aufeinanderfolgende Änderungen des Bezugsnetzes bewirkt wird.

7. Verfahren nach einem der Ansprüche 1 bis 6, dadurch gekennzeichnet, daß man die Beobachtungsfläche so anordnet, daß das Objekt A und das Bildaufnahmegerät auf einer gleichen Seite der besagten Beobachtungsfläche sind, wobei diese durch eine Schirmfläche (24) gebildet wird, die so beschaffen ist, daß die Flecke $T_{A1}$, $T_{A2}$, $T_{A3}$ und die Flecke $T_{B1}$, $T_{B2}$, $T_{B3}$ in für das Bildaufnahmegerät sichtbarer Form geboten werden.

8. Verfahren nach einem der Ansprüche 1 bis 6, dadurch gekennzeichnet, daß die Beobachtungsfläche zwischen dem Objekt A und dem Bildaufnahmegerät angeordnet wird, wobei die besagte Beobachtungsfläche durch eine lichtdurchlässige Oberfläche (9) gebildet wird, um die Flecke $T_{A1}$, $T_{A2}$, $T_{A3}$ in der Form sichtbarer Bilder an der Seite des Bildaufnahmegeräts und Flecke $T_{B1}$, $T_{B2}$, $T_{B3}$ in ebenfalls durch das Bildaufnahmegerät sichtbarer Form zu bieten.

9. Verfahren nach Anspruch 3, dadurch gekennzeichnet, daß man die drei Strahlen $F_{A1}$, $F_{A2}$, $F_{A3}$ in solchen Richtungen emittiert, daß die Spitzenwinkel $\alpha$, $\beta$, $\gamma$ der Pyramide rechte Winkel sind, wobei die Berechnung der Oberflächen $SURF_1$, $SURF_2$, $SURF_3$ darin besteht, drei Kugeln mit einem Durchmesser von $T_{A2}T_{A3}$, $T_{A1}T_{A3}$ bzw. $T_{A1}T_{A2}$ zu berechnen.

10. Verfahren nach Anspruch 9, dadurch gekennzeichnet, daß man (a) die drei von drei ein gleichseitiges Dreieck bildenden Punkten $E_{A1}$, $E_{A2}$, $E_{A3}$ ausgehend konvergierenden Strahlen in solchen Richtungen emittiert, daß die anderen Flächen der durch diese Strahlen gebildeten Pyramide mit gleichseitiger Basis gleichschenkelige Dreiecke sind.

11. Verfahren nach einem der vorstehenden Ansprüche, dadurch gekennzeichnet, daß
    (c) eine ebene Beobachtungsfläche errichtet wird,
    (e) die drei Strahlen $F_{B1}$, $F_{B2}$, $F_{B3}$ zueinander parallel und senkrecht zu der Beobachtungsfläche emittiert werden,
    (g) das Bildaufnahmegerät so angeordnet wird, daß dessen optische Achse zu der Richtung der Strahlen $F_{B1}$, $F_{B2}$, $F_{B3}$ parallel ist.

12. Verfahren nach einem der vorstehenden Ansprüche, dadurch gekennzeichnet, daß das Bildaufnahmegerät mit der Beobachtungsfläche in Verbindung steht.

13. Verfahren nach einem der Ansprüche 1 bis 12, dadurch gekennzeichnet, daß die einzelnen Fleckbilder dadurch unterschieden werden, daß nur der entsprechende Strahl emittiert und zwecks Verarbeitung des Bildes eine Kennzeichnung des besagten Strahls übertragen wird.

14. Verfahren nach Anspruch 13, dadurch gekennzeichnet, daß es zwecks sequentieller Bestimmung der Parameter in wiederholten Zyklen durchgeführt wird, wobei jeder Zyklus darin besteht:
    - die die Flecke $T_{A1}$, $T_{A2}$, $T_{A3}$, $T_{B1}$, $T_{B2}$, $T_{B3}$ ergebenden Lichtstrahlen zeitlich nacheinander zu emittieren,
    - jeden Fleck im Augenblick der Emission des entsprechenden Strahls zu beobachten und die Position des entsprechenden Bildes $I_{A1}$, $I_{A2}$, $I_{A3}$, $I_{B1}$, $I_{B2}$, $I_{B3}$ vor Emission des folgenden Lichtstrahls zu erfassen und zu speichern,
    - nach Speicherung der Positionen aller Bilder die Berechnungen auszuführen, um die Parameter der Position und Orientierung des Objekts im Laufe des betreffenden Zyklus durchzuführen.

15. Verfahren nach einem der Ansprüche 1 bis 12, dadurch gekennzeichnet, daß die einzelnen Fleckbilder dadurch unterschieden werden, daß auf zyklischem Wege im Einklang mit einer vorbestimmten Vorschrift eine unterschiedliche Anzahl von Strahlen emittiert wird, die Fleckbilder beobachtet werden und jedes Fleckbild durch Verarbeitung des Bildes im Einklang mit der vorbestimmten Vorschrift gekennzeichnet wird.

16. Verfahren nach Anspruch 15, dadurch gekennzeichnet, daß es zwecks sequentieller Bestimmung von Parametern in wiederholten Zyklen durchgeführt wird, wobei jeder Zyklus darin besteht:
    - zeitlich nacheinander einen Fleck $T_{A1}$ ergebenden Lichtstrahl zu emittieren, den besagten Fleck zu beobachten und die Position des entsprechenden Bildes $I_{A1}$ zu erfassen und zu speichern,
    - danach zusätzlich zu dem ersten Strahl einen weiteren Strahl zu emittieren, der einen weiteren Fleck $T_{A2}$ ergibt, diesen neuen Fleck zu beobachten und die Position des entsprechenden Bildes $I_{A2}$ zu erfassen und zu speichern, und das Verfahren bis zur Emission von sechs Strahlen, der Beobachtung des letzten erschienenen Flecks $T_{B3}$ und der Erfassung und Speicherung der Position des entsprechenden Bildes $I_{B3}$ fortzusetzen.

17. Verfahren nach einem der Ansprüche 1 bis 12, dadurch gekennzeichnet, daß Strahlen unterschiedlicher Frequenzmerkmale emittiert und die entsprechenden Flecke durch entsprechende Filtration an dem Bildaufnahmegerät unterschieden werden.

18. Verfahren nach einem der vorstehenden Ansprüche, bei dem:

(g) die Beobachtungsoberfläche mit Hilfe eines abtastenden Bildaufnahmegeräts, das ein Videobild der besagten Oberfläche liefert, beobachtet wird,

(i) die Verarbeitung des Bildes darin besteht, in jedem Teilbild des Videobildes die waagerechte bzw. die senkrechte Achse des Schwerpunkts des jeweiligen Bildflecks zu bestimmen.

19. Verfahren nach Anspruch 1, dadurch gekennzeichnet, daß:

(l) von drei mit dem Objekt A in Verbindung stehenden Punkten $E_{A4}$, $E_{A5}$, $E_{A6}$ ausgehend drei neue, zueinander parallele Lichtstrahlen emittiert werden, um auf der Beobachtungsfläche drei neue Flecke $T_{A4}$, $T_{A5}$, $T_{A6}$, die sogenannten Hilfsflecke, zu erzeugen, (g′) (i′) zwecks Erzeugung von Bildern $I_{A4}$, $I_{A5}$, $I_{A6}$ der besagten Hilfsflecke die Beobachtungsfläche mit Hilfe des Bildaufnahmegeräts beobachtet wird und deren Koordinaten in dem mit der empfindlichen Oberfläche in Verbindung stehenden Bezugsnetz durch Bildverarbeitung analoger Art wie bei den Flecken $T_{A1}$, $T_{A2}$, $T_{A3}$ berechnet werden, (j) die Koordinaten der Pyramidenspitze P berechnet werden, indem durch Triangulation aufgrund der Koordinaten der Flecke $T_{A1}$, $T_{A2}$, $T_{A3}$ und der Hilfsflecke $T_{A4}$, $T_{A5}$, $T_{A6}$ drei Kugelhalbmesser $T_{A1}P$, $T_{A2}P$, $T_{A3}P$ und die Koordinaten des Schnittpunkts P dieser Kugeln berechnet werden, deren Mittelpunkt jeweils der entsprechende Fleck $T_{A1}$, $T_{A2}$ bzw. $T_{A3}$ ist,

. die Koordinaten der Punkte $E_{A1}$, $E_{A2}$ und $E_{A3}$ berechnet werden, indem man die entsprechende Gerade $PT_{A1}$, $PT_{A2}$ bzw. $PT_{A3}$ berechnet und von P ausgehend algebraisch die Länge der entsprechenden Pyramidenkante hinzuaddiert.

20. System zur Bestimmung der Parameter der Position und Orientierung eines Objekts A im Verhältnis zu einem Objekt B im Raum zwecks Durchführung des Verfahrens nach Anspruch 8, dadurch gekennzeichnet, daß es die folgenden Vorrichtungen umfaßt:

- drei Lichtemissionsvorrichtungen (3), die sogenannten Emissionsvorrichtungen A, die an einem ersten Träger (1) befestigt und so beschaffen sind, daß sie konvergierende Strahlen emittieren, wobei der besagte erste Träger mit Mitteln (1b) zur Befestigung an dem Objekt A ausgestattet ist,

- eine lichtdurchlässige Beobachtungsfläche (9), die in dem Pfad der Strahlen angeordnet und an einem zweiten Träger (10) befestigt ist,

- ein Bildaufnahmegerät (11), das an einem dritten Träger (12) befestigt und der Beobachtungsfläche gegenüber auf der den drei Emissionsvorrichtungen A abgewandten Seite angeordnet ist, wobei das besagte Bildaufnahmegerät mit Erfassungsmitteln versehen ist, so daß es für die Position der erfaßten Bilder repräsentative Signale liefert,

- drei Lichtemissionsvorrichtungen (13), die sogenannten Emissionsvorrichtungen B, die mit dem Bildaufnahmegerät fest verbunden und so beschaffen sind, daß sie Strahlen auf die Beobachtungsfläche zu emittieren,

- Mittel (14) zur Steuerung der Lichtemissionsvorrichtungen zwecks Auslösung der Strahlemissionen in vorbestimmten Augenblicken,

- einen Speicher (17) zum Speichern der geometrischen und optischen Kennzeichen der Strahlen und des Bildaufnahmesystems,

- Bildverarbeitungsmittel (15), die so beschaffen sind, daß sie die von den Erfassungsmitteln des Bildaufnahmegeräts abgegebenen Signale verarbeiten,

- und Berechnungsmittel (16), die so beschaffen sind, daß sie die von den Bildverarbeitungsmitteln abgegebenen Signale und die in dem Speicher enthaltenen Parameter empfangen, wobei die besagten Berechnungsmittel so programmiert sind, daß sie die Parameter der Position und Orientierung des Objektes A im Verhältnis zu dem Objekt B berechnen und liefern.

21. System zur Bestimmung der Parameter der Position und Orientierung eines Objekts A im Verhältnis zu einem Objekt B im Raum zwecks Durchführung des Verfahrens nach Anspruch 7, dadurch gekennzeichnet, daß es die folgenden Vorrichtungen umfaßt:

- drei Lichtemissionsvorrichtungen, die sogenannten Emissionsvorrichtungen A, die an einem ersten Träger befestigt und so beschaffen sind, daß sie konvergierende Strahlen emittieren, wobei der besagte erste Träger mit Mitteln zur Anbringung an das Objekt A versehen ist,

- eine in dem Pfad der Strahlen angeordnete Beobachtungsfläche, die an einem zweiten Träger befestigt ist, wobei die besagte Fläche eine Schirmoberfläche (24) umfaßt, die in der Lage ist, an ihrer auf der Seite der drei Emissionsvorrichtungen A befindlichen Fläche Flecke zu bilden,

- ein an einem dritten Träger befestigtes Bildaufnahmegerät, das der Schirmfläche gegenüber auf der gleichen Seite wie die drei Emissionsvorrichtungen A angeordnet ist, wobei das besagte Bildaufnahmegerät mit Erfassungsmitteln versehen ist, um für die Position der erfaßten Bilder repräsentative Signale zu liefern,

- drei Lichtemissionsvorrichtungen, die sogenannten Emissionsvorrichtungen B, die mit dem Bildaufnahmegerät fest verbunden und so beschaffen sind, daß sie Strahlen auf die Beobachtungsfläche zu emittieren,

- Mittel zur Steuerung der Lichtemissionsvorrichtungen zwecks Auslösung der Strahlemissionen in vorbestimmten Augenblicken,

- einen Speicher für die geometrischen und optischen Daten der Strahlen und des Bildaufnahmesystems,

- Bildverarbeitungsmittel, die so beschaffen sind, daß sie die von den Erfassungsmitteln des Bildaufnahmesystems gelieferten Signale verarbeiten,

- und Berechnungsmittel, die so angeordnet sind, daß sie die von den Bildverarbeitungsmitteln abgegebenen Signale und die in dem Speicher enthaltenen Parameter empfangen, wobei die besagten Berechnungsmittel so programmiert sind, daß sie die Parameter der Position und Orientierung des Objektes A im Verhältnis zu dem Objekt B berechnen und liefern.

22. System nach einem der Ansprüche 20 oder 21, bei dem die Lichtemissionsvorrichtungen (3, 13) Laserdioden (8) umfassen, die mit einem optischen Fokussiersystem (4) in Verbindung stehen.

23. System nach Anspruch 22, bei dem das Bildaufnahmegerät eine für die Wellenlänge der Laserdioden (8) empfindliche Videokamera (11) ist.

24. System nach Anspruch 23, bei dem die Bildverarbeitungsmittel (15) eine Vergleichsstufe (18) umfassen, die das Videosignal zwecks Nachweis jedes Fleckbilds empfängt, sowie einen Synchronisierextraktor (19), der Taktsignale liefert, einen Abszissenzähler (20), einen Ordinatenzähler (21) und einen Flecklängenzähler (22) sowie einen Rechenautomaten (23), um die Position des Fleckbildschwerpunkts aufgrund der Zählerwerte zu bestimmen.

25. System nach einem der Ansprüche 20, 21, 22, 23 oder 24, bei dem die Berechnungsmittel (16) einen Rechner umfassen, der durch dem in den Bildern 12a und 12b dargestellten Logikplan entsprechende Software programmiert ist.

## Claims

1. Process for determining relative positional and orientational parameters in space of an object A in relation to another object B, characterised in that it consists:

(a) in emitting from three points $E_{A1}$, $E_{A2}$, $E_{A3}$ which are associated with the object A and unaligned, three beams of light $F_{A1}$, $F_{A2}$, $F_{A3}$ converging at a point P outside the plane of the three points so as to produce a pyramid of predetermined geometry,

(b) in memorising the geometric characteristics of said pyramid,

(c) in arranging an observation surface S of known geometry such that the beams of light $F_{A1}$, $F_{A2}$, $F_{A3}$ intersect said surface and generate on the latter three dots of light $T_{A1}$, $T_{A2}$, $T_{A3}$,

(d) in memorising the geometric characteristics of the observation surface,

(e) in emitting from three points $E_{B1}$, $E_{B2}$, $E_{B3}$, which are associated with the object B and unaligned, three beams of light $F_{B1}$, $F_{B2}$, $F_{B3}$ of predetermined geometric characteristics so as to generate on or through the observation surface three dots or images designated as dots $T_{B1}$, $T_{B2}$, $T_{B3}$,

(f) in memorising the geometric characteristics of the beams $F_{B1}$, $F_{B2}$, $F_{B3}$,

(g) in observing the observation surface S by means of an image pick-up device (11) of predetermined characteristics and having a sensitive surface (11a), said device being associated with the object B and adapted to generate images $I_{A1}$, $I_{A2}$, $I_{A3}$ of dots $T_{A1}$, $T_{A2}$, $T_{A3}$ and images $I_{B1}$, $I_{B2}$, $I_{B3}$ of dots $T_{B1}$, $T_{B2}$, $T_{B3}$,

(h) in memorising the characteristics of the image pick-up device,

(i) in image processing with a view to calculating from the position of the aforementioned images the coordinates of the images $I_{A1}$, $I_{A2}$, $I_{A3}$ in a grid associated with the sensitive surface (11a) of the image pick-up device,

(j) in calculating from said coordinates characteristics of the image pick-up device, the pyramid $E_{A1}$, $E_{A2}$, $E_{A3}$, P, the observation surface and the beams $F_{B1}$, $F_{B2}$, $F_{B3}$, as well as the coordinates of the apexes of said pyramid within a reference system associated with the object B,

(k) and in deducing therefrom the positional and orientational parameters of the object A in relation to the object B.

2. Process according to Claim 1, characterised in that (j) the calculation of the coordinates of the apexes of the pyramid within a system of reference associated with the object B consists:

(j$_1$) in calculating the coordinates of the apexes of the pyramid within a system of reference associated with the dots $T_{A1}$, $T_{A2}$, $T_{A3}$ from the geometric parameters of the pyramid,

(j$_2$) in calculating the coordinates of the dots $T_{B1}$, $T_{B2}$, $T_{B3}$ within a system of reference associated with the object B from the characteristics of the image pick-up device and the geometric characteristics of the beams $F_{B1}$, $F_{B2}$, $F_{B3}$,

(j$_3$) in calculating the coordinates of the dots $T_{A1}$, $T_{A2}$, $T_{A3}$ within a system of reference associated with the object B from the calculated coordinates of the images $I_{A1}$, $I_{A2}$, $I_{A3}$,

(j$_4$) and in calculating the coordinates of the pyramid $E_{A1}$, $E_{A2}$, $E_{A3}$ within the system of reference associated with the object B from the results of the calculations (j$_1$) , (j$_2$) and (j$_3$).

3. Process according to Claim 2, characterised in that (j$_1$), the calculation of the coordinates of the apexes $E_{A1}$, $E_{A2}$, $E_{A3}$, P of the pyramid within a system of reference associated with the dots $T_{A1}$, $T_{A2}$, $T_{A3}$ consists:

- in calculating a first surface $SURF_1$ constituted by the geometric locus of the points from which the dots $T_{A2}$, $T_{A3}$ are seen at the angle $\alpha$, the angle ($E_{A2}$, P, $E_{A3}$) at the corresponding apex of the pyramid,
- in calculating a second surface $SURF_2$ constituted by the geometric locus of the points from which the dots $T_{A1}$, $T_{A3}$ are seen at the angle $\beta$, the angle ($E_{A1}$, P, $E_{A3}$) of the corresponding apex of the pyramid,
- in calculating a third surface $SURF_3$ constituted by the geometric locus of the point from which the dots $T_{A1}$, $T_{A2}$ are seen at the angle $\gamma$, the angle ($E_{A1}$, P, $E_{A2}$) of the corresponding apex of the pyramid,
- in calculating the coordinates of the point of intersection P of said three surfaces,
- in then deducing therefrom the coordinates of each point $E_{A1}$, $E_{A2}$ and $E_{A3}$ by calculating the corresponding straight line $PT_{A1}$, $PT_{A2}$, $PT_{A3}$ and by algebraically adding the length from point P of the corresponding edge of the pyramid ($a = PE_{A1}$, $b = PE_{A2}$, $c = PE_{A3}$).

4. Process according to one of Claims 2 or 3, characterised in that the observation surface S is observed with the aid of an image pick-up device with an optical centre $C_o$ and in that (j$_2$) the calculation of the coordinates of the dots $T_{B1}$, $T_{B2}$, $T_{B3}$ within a system of reference associated with the object B consists:

- in determining the dot $T_{B1}$ as being at the intersection of the beam $F_{B1}$ with the optical path $I_{B1}C_o$,
- in determining the dot $T_{B2}$ as being at the intersection of the beam $F_{B2}$ with the optical path $I_{B2}C_o$,
- in determining the dot $T_{B3}$ as being at the intersection of the beam $F_{B3}$ with the optical path $I_{B3}C_o$,
- in deducing therefrom the coordinates of the dots $T_{B1}$, $T_{B2}$, $T_{B3}$ within a system of reference associated with the image plane of the image pick-up device and hence with the object B.

5. Process according to Claim 4, characterised in that (j$_3$) the calculation of the coordinates of the dots $T_{A1}$, $T_{A2}$, $T_{A3}$ within a system associated with the object B consists:

- in determining the dot $T_{A1}$ as being at the intersection of the optical path $F_{A1}C_o$ with the observation surface,
- in determining the dot $T_{A2}$ as being at the intersection of the optical path $F_{A2}C_o$ with the observation surface,
- in determining the dot $T_{A3}$ as being at the intersection of the optical path $F_{A3}C_o$ with the observation surface,
- and in deducing the coordinates of the dots $T_{A1}$, $T_{A2}$, $T_{A3}$ within a grid associated with the sensitive surface (11a) of the image pick-up device.

6. Process according to one of Claims 2, 3, 4 or 5, characterised in that (j$_4$), the final calculation of the coordinates of the apexes $E_{A1}$, $E_{A2}$, $E_{A3}$ of the pyramid within the system of reference associated with the object B, is effected by successive changes of grid.

7. Process according to one of Claims 1 to 6, characterised in that the observation surface is so arranged as to ensure that the object A and the image pick-up device are on the same side of said observation surface, whereby the latter comprises a screen surface (24) capable of providing the dots $T_{A1}$, $T_{A2}$, $T_{A3}$ and the dots $T_{B1}$, $T_{B2}$, $T_{B3}$ in such a way as to be visible to the image pick-up device.

8. Process according to one of Claims 1 to 6, characterised in that the observation surface is arranged between the object A and the image pick-up device, said observation surface comprising a translucent surface (9) so as to provide the dots $T_{A1}$, $T_{A2}$, $T_{A3}$ in the form of visible images on the side facing the image pick-up device as well as dots $T_{B1}$, $T_{B2}$, $T_{B3}$ likewise visible to the image pick-up device.

9. Process according to Claim 3, characterised in that the three beams $F_{A1}$, $F_{A2}$, $F_{A3}$ are emitted in such directions as to ensure that the apex angles $\alpha$, $\beta$, $\gamma$ of the pyramid are right angles, whereby the calculation of the surfaces $SURF_1$, $SURF_2$, $SURF_3$ consists in calculating three spheres with a diameter equal to $T_{A2}T_{A3}$, $T_{A1}T_{A3}$, $T_{A1}T_{A2}$ respectively.

10. Process according to Claim 9, characterised in that (a) the three convergent beams are emitted from three points $E_{A1}$, $E_{A2}$, $E_{A3}$ forming an equilateral triangle in such directions as to ensure that the pyramid with an equilateral base formed by said beams has isosceles triangles by way of other faces.

11. Process according to one of the preceding claims, characterised in that:
(c) a flat observation surface is placed in position,
(e) the three beams $F_{B1}$, $F_{B2}$, $F_{B3}$ are emitted parallel to one another and at right angles to the observation surface,
(g) the image pick-up device is positioned in such a way as to ensure that its optical axis is aligned with the direction of the beams $F_{B1}$, $F_{B2}$, $F_{B3}$.

12. Process according to one of the preceding claims, characterised in that the image pick-up device is associated with the observation surface.

13. Process according to one of Claims 1 to 12, characterised in that each dot image is distinguished by emitting only the corresponding beam and by transmitting, with a view to processing said image, identifying information in respect of said beam.

14. Process according to Claim 13, characterised in that it is carried out in repeated cycles with a view to sequential determination of the parameters, whereby each cycle consists:
- in emitting, in temporal sequence, the beams of light producing the dots $T_{A1}$, $T_{A2}$, $T_{A3}$, $T_{B1}$, $T_{B2}$, $T_{B3}$,
- in observing each dot at the instant at which the corresponding beam is emitted and in acquiring and memorising the position of the corresponding image $I_{A1}$, $I_{A2}$, $I_{A3}$, $I_{B1}$, $I_{B2}$, $I_{B3}$ prior to the emission of the following beam of light,
- in carrying out, after memorising the positions of all the images, the calculations required to obtain the positional and orientational parameters of the object in the course of the cycle under consideration.

15. Process according to one of Claims 1 to 12, characterised in that each dot image is distinguished by emitting, in cyclic manner according to a predetermined rule, a variable number of beams, by observing the images of the dots and by identifying each dot image by processing the image in accordance with the predetermined rule.

16. Process according to Claim 15, characterised in that it is carried out in repeated cycles with a view to sequential determination of the parameters, whereby each cycle consists:
- in emitting, in temporal sequence, a beam of light producing a dot $T_{A1}$, in observing said dot and in acquiring and memorising the position of the corresponding image $I_{A1}$,
- in then emitting another beam in addition to the first beam so as to produce another dot $T_{A2}$, in observing said new dot and in acquiring and memorising the position of the corresponding image $I_{A2}$ and so on until six beams have been emitted, the last dot to appear, $T_{B3}$, has been observed and the position of the corresponding image $I_{B3}$ has been acquired and memorised.

17. Process according to one of Claims 1 to 12, characterised in that beams with different frequency characteristics are emitted and the corresponding dots are distinguished by appropriate filtration on the image pick-up device.

18. Process according to one of the preceding claims, in which:
(g) the observation surface is observed with the aid of a scanning image pick-up device providing a video image of said surface,
(i) the image processing consists in determining, within each frame of the video image, the horizontal and the vertical axis of the centre of gravity of the image of each dot.

19. Process according to Claim 1, characterised in that:
(l) from three points $E_{A4}$, $E_{A5}$, $E_{A6}$ associated with the object A, three further beams of light parallel to one another are emitted with a view to generating on the observation surface three further dots $T_{A4}$, $T_{A5}$, $T_{A6}$, the so-called ancillary dots,

(g') (i') the observation surface is observed with the aid of the image pick-up device so as to generate images $I_{A4}$, $I_{A5}$, $I_{A6}$ of said ancillary dots and their coordinates are calculated within the grid associated with the sensitive surface by image processing in a manner analogous to that carried out in respect of the dots $T_{A1}$, $T_{A2}$, $T_{A3}$,

(j) the coordinates of the apex P of the pyramid are calculated by calculating three sphere radii $T_{A1}P$, $T_{A2}P$, $T_{A3}P$ by triangulation from the coordinates of the dots $T_{A1}$, $T_{A2}$, $T_{A3}$ and the ancillary dots $T_{A4}$, $T_{A5}$, $T_{A6}$ and by calculating the coordinates of the intersection point P of said spheres centred on the corresponding dot $T_{A1}$, $T_{A2}$ or $T_{A3}$,

. the coordinates of the points $E_{A1}$, $E_{A2}$ and $E_{A3}$ are calculated by calculating the corresponding straight line $PT_{A1}$, $PT_{A2}$ or $PT_{A3}$ and by algebraically adding the length from point P of the corresponding edge of the pyramid.

20. System for determining the positional and orientational parameters of an object A in relation to an object B in space with a view to carrying out the process according to Claim 8, characterised in that it comprises:
   - three light-emitting devices (3), the so-called emitting devices A, mounted on a first chassis (1) and so adapted as to emit convergent beams, said first chassis being equipped with securing means (1b) on the object A,
   - a translucent observation surface (9) placed in the path of the beams and mounted on a second chassis (10),
   - an image pick-up device (11) mounted on a third chassis (12) and arranged opposite the observation surface on the other side from the three emitting devices A, said image pick-up device being endowed with acquisition means with a view to providing signals representative of the position of the captured images,
   - three light-emitting devices (13), the so-called emitting devices B, these being firmly secured to the image pick-up device and adapted to emit beams towards the observation surface,
   - means (14) for controlling the light-emitting devices with a view to triggering the beam emissions at predetermined instants,
   - a memory (17) for storing the geometric and optical characteristics of the beams and the image pick-up system,
   - image-processing means (15) adapted for processing the signals emanating from the acquisition means of the image pick-up device,
   - and calculating means (16) arranged to receive the signals emanating from the image-processing means and the parameters contained within the storage memory, said means being programmed to calculate and provide the positional and orientational parameters of the object A in relation to the object B.

21. System for determining the positional and orientational parameters of an object A in relation to an object B in space, with a view to carrying out the process according to Claim 7, characterised in that it comprises:
   - three light-emitting devices, the so-called emitting devices A, mounted on a first chassis and adapted to emit convergent beams, said first chassis being equipped with securing means on the object A,
   - an observation surface located within the path of the beams and mounted on a second chassis, said surface comprising a screen surface (24) capable of generating dots on its face situated on the same side as the three emitting devices A,
   - an image pick-up device mounted on a third chassis and arranged opposite the screen surface on the same side as the three emitting devices A, said image pick-up device being endowed with acquisition means with a view to providing signals representative of the positions of the captured images,
   - three light-emitting devices, the so-called emitting devices B, which are firmly secured to the image pick-up device and so adapted as to emit beams towards the observation surface,
   - control means for the light-emitting devices with a view to triggering the emission of beams at predetermined instants,
   - a memory for storing the geometric and optical characteristics of the beams and the image pick-up device,
   - image-processing means adapted for processing the signals emanating from the acquisition means of the image pick-up system,
   - and calculating means arranged to receive the signals emanating from the image-processing means and the parameters contained in the storage memory, said means being programmed so as to calculate and provide the positional and orientational parameters of the object A in relation to the object B.

22. System according to one of Claims 20 or 21, in which the light-emitting devices (3, 13) comprise laser diodes (8) associated with an optical focusing system (4).

23. System according to Claim 22, in which the image pick-up device is a video camera (11) which is sensitive to the wavelength of the laser diodes (8).

24. System according to Claim 23, in which the image processing means (15) comprise a comparator (18) receiving the video signal with a view to detecting each dot image, a synchronisation extractor (19) providing timing signals, an abscissa counter (20), an ordinate counter (21) and a dot-length counter (22) as well as an automatic calculator (23) with a view to determining the position of the centre of gravity of the dot image from the values provided by the counters.

25. System according to one of Claims 20, 21, 22, 23 or 24, in which the calculating means (16) comprise a calculator programmed by software corresponding to the logic diagram in Figures 12a and 12b.

Fig. 1

Armoire de commande du robot

Mémoire de stockage — 17

Moyens de calcul — 16

14 — Emission faisceaux

15 — Traitement d'image

EP 0 385 528 B1

EP 0 385 528 B1

Fig. 2

E A1

5

1

3

7

6

4

1a

1b

a

F A1

E A3

8

F A3

2

c

F A2

b

P

/H₁

E A2

Fig. 3

b

F A2

P

1

4

7

8

c

F A3

E A3

2

5

22

Fig. 4

$T_{B1}$

$T_{B3}$

$F_{B3}$

$T_{B2}$

$F_{B1}$

$F_{B2}$

9

13

12b

11

B

12a

12

10

Fig. 5

9

13

$F_{B1}$

$E_{B1}$

11

$F_{B3}$

$F_{B2}$

$E_{B2}$

12a

10

12

Fig. 6

Moyens de commande d'émission

14

Moyens de traitement d'image

15

Mémoire de stockage

17

Moyens de calcul des paramètres de position et d'orientation des objets

16

Fig. 7

Caméra

11

comparateur

18

extracteur

19

compteur X

20

compteur Y

21

compteur L

22

automate de calcul

23

# Fig. 8

**25**

Automate de commande

d'allumage des faisceaux

liés à l'objet A

**26**

Automate de commande

d'allumage des faisceaux

liés à l'objet B

**27**

Commutateur électronique

Commutateur électronique

Commutateur électronique

Commutateur électronique

Commutateur électronique

Commutateur électronique

**8**

Diode Laser $E_{A1}$

Diode Laser $E_{A2}$

Diode Laser $E_{A3}$

Diode Laser $E_{B1}$

Diode Laser $E_{B2}$

Diode Laser $E_{B3}$

**14**

EP 0 385 528 B1

Fig. 9

26

Fig. 10

$C_0$

$Z$

$I_{A1}$

$I_{B2}$

$I_{A3}$

$Y$    $X$

$I_{A2}$    $I_{B3}$

$I_{B1}$

11a

SURFACE   SENSIBLE   CAMERA

Fig. 11

CRV1

$S$

9

$E_{A1}$

$F_{A1}$

$T_{A2}$

$T_{A3}$

$E_{A3}$    $F_{A3}$

$\alpha$

$P$

$T_{A1}$

$F_{A2}$

SURF1

$E_{A2}$

27

# Fig. 12a

Mémorisation des paramètres géométriques des :

- points $E_{B1}$, $E_{B2}$, $E_{B3}$

- droites $F_{B1}$, $F_{B2}$, $F_{B3}$

- point $C_0$

- angles $\alpha$, $\beta$, $\gamma$

- segments arêtes a, b, c

---

Point $I_{B1}$
Point $I_{B2}$
Point $I_{B3}$

Calcul des points $T_{B1}$, $T_{B2}$, $T_{B3}$

- $T_{B1}$ intersection des droites $I_{B1}$ $C_0$ et $F_{B1}$

- $T_{B2}$ intersection des droites $I_{B2}$ $C_0$ et $F_{B2}$

- $T_{B3}$ intersection des droites $I_{B3}$ $C_0$ et $F_{B3}$

---

Calcul de la surface S définie par les points $T_{B1}$, $T_{B2}$, $T_{B3}$

- plan passant par les points $T_{B1}$, $T_{B2}$, $T_{B3}$

---

Point $I_{A1}$
Point $I_{A2}$
Point $I_{A3}$

Calcul des points $T_{A1}$, $T_{A2}$, $T_{A3}$ formés sur S par $F_{A1}$, $F_{A2}$, $F_{A3}$

- point $T_{A1}$ intersection de la droite $I_{A1}$ $C_0$ et du plan S

- point $T_{A2}$ intersection de la droite $I_{A2}$ $C_0$ et du plan S

- point $T_{A3}$ intersection de la droite $I_{A3}$ $C_0$ et du plan S

---

Calcul des arcs de cercle dans S

- CRV1 d'où l'on voit le segment $T_{A2}$ $T_{A3}$ sous l'angle $\alpha$

- CRV2 d'où l'on voit le segment $T_{A3}$ $T_{A1}$ sous l'angle $\beta$

- CRV3 d'où l'on voit le segment $T_{A1}$ $T_{A2}$ sous l'angle $\gamma$

vers 12b

## Fig. 12b

de    12 a

Calcul des surfaces :

- SURF1 engendrée par la rotation de CRV1 autour de $T_{A2}$ $T_{A3}$

- SURF2 engendrée par la rotation de CRV2 autour de $T_{A3}$ $T_{A1}$

- SURF3 engendrée par la rotation de CRV3 autour de $T_{A1}$ $T_{A2}$

Calcul de la pyramide $E_{A1}$, $E_{A2}$, $E_{A3}$, P

  - point P intersection de SURF1, SURF2 et SURF3

  - point $E_{A1}$ sur la droite $T_{A1}$ P à la distance a du point P

  - point $E_{A2}$ sur la droite $T_{A2}$ P à la distance b du point P

  - point $E_{A3}$ sur la droite $T_{A3}$ P à la distance c du point P

Calcul des paramètres de position X, Y, Z

et d'orientation O, A, T

de l'objet A par rapport à l'objet B

EP 0 385 528 B1

## Fig. 13

```
┌─────────────────────────────────────┐
│      Emission du faisceau F_A1        │
└─────────────────────────────────────┘
                    │
                    ▼
┌───────────────────────────────────────────────┐
│  Réception de l'image de la tache identifiée I_A1 │
│      Mémorisation de ses coordonnées            │
└───────────────────────────────────────────────┘
                    │
                    ▼
┌─────────────────────────────────────┐
│      Emission du faisceau F_A2        │
└─────────────────────────────────────┘
                    │
                    ▼
┌───────────────────────────────────────────────┐
│  Réception de l'image de la tache identifiée I_A2 │
│      Mémorisation de ses coordonnées            │
└───────────────────────────────────────────────┘
                    │
                    ▼
┌─────────────────────────────────────┐
│      Emission du faisceau F_A3        │
└─────────────────────────────────────┘
                    │
                    ▼
┌───────────────────────────────────────────────┐
│  Réception de l'image de la tache identifiée I_A3 │
│      Mémorisation de ses coordonnées            │
└───────────────────────────────────────────────┘
                    │
                    ▼
┌─────────────────────────────────────┐
│      Emission du faisceau F_B1        │
└─────────────────────────────────────┘
                    │
                    ▼
┌───────────────────────────────────────────────┐
│  Réception de l'image de la tache identifiée I_B1 │
│      Mémorisation de ses coordonnées            │
└───────────────────────────────────────────────┘
                    │
                    ▼
┌─────────────────────────────────────┐
│      Emission du faisceau F_B2        │
└─────────────────────────────────────┘
                    │
                    ▼
┌───────────────────────────────────────────────┐
│  Réception de l'image de la tache identifiée I_B2 │
│      Mémorisation de ses coordonnées            │
└───────────────────────────────────────────────┘
                    │
                    ▼
┌─────────────────────────────────────┐
│      Emission du faisceau F_B3        │
└─────────────────────────────────────┘
                    │
                    ▼
┌───────────────────────────────────────────────┐
│  Réception de l'image de la tache identifiée I_B3 │
│      Mémorisation de ses coordonnées            │
└───────────────────────────────────────────────┘
```

## Fig.14

Extinction de tous les faisceaux pendant une durée T

Emission du faisceau $F_{A1}$ seul pendant une durée $T_0$

Emission simultanée des faisceaux $F_{A1}$ et $F_{A2}$ pendant une durée $T_0$

Emission simultanée des faisceaux $F_{A1}$, $F_{A2}$ et $F_{A3}$ pendant une durée $T_0$

Emission simultanée des faisceaux $F_{A1}$, $F_{A2}$ et $F_{A3}$ pendant une durée $T_0$

Emission simultanée des faisceaux $F_{A1}$, $F_{A2}$ et $F_{A3}$ pendant une durée $T_0$

Emission simultanée des faisceaux $F_{A1}$, $F_{A2}$ et $F_{A3}$ pendant une durée $T_0$

Emission du faisceau $F_{B1}$ seul pendant un temps $T_0$

Emission des faisceaux $F_{B1}$ et $F_{B2}$ ensemble pendant un temps $T_0$

Emission des faisceaux $F_{B1}$, $F_{B2}$ et $F_{B3}$ ensemble pendant un temps $T_0$

Attente de réception d'une image de tache

Réception d'une seule image de taches Identification de $I_{A1}$ Mémorisation de ses coordonnées

Réception de 2 images de taches Identification de $I_{A2}$ Mémorisation de ses coordonnées

Réception de 3 images de taches Identification de $I_{A3}$ Mémorisation de ses coordonnées

Réception de 4 images de taches Identification de $I_{B1}$ Mémorisation de ses coordonnées

Réception de 5 images de taches Identification de $I_{B2}$ Mémorisation de ses coordonnées

Réception de 6 images de taches Identification de $I_{B3}$ Mémorisation de ses coordonnées

Fig. 15

$E_{A1}$

$E_{A3}$

$F_{A3}$

$E_{A2}$   A   $F_{A1}$

P

S

24

$F_{A2}$

$T_{A2}$

$T_{B1}$

$T_{A1}$   $T_{B2}$   $T_{B3}$

$T_{A3}$

$F_{B2}$   $F_{B1}$   $F_{B3}$

$E_{B2}$   $E_{B1}$   $E_{B3}$

Armoire
de
commande
du
robot

Mémoire de stockage

Moyens de calcul

Emission faisceaux

Traitement d'image

EP 0 385 528 B1

Fig. 16

Fig. 18

Fig. 17

## Fig. 19a

Mémorisation des paramètres

- arêtes de la pyramide a, b, c
- angles au sommet $\alpha$ , $\beta$ , $\gamma$
- autres paramètres (cf figure 12)

$I_{B1}$ →
$I_{B2}$ →
$I_{B3}$ →

Calcul des points $T_{B1}$, $T_{B2}$, $T_{B3}$ comme dans l'algorithme (figure 12)

Détermination de la surface S comme dans l'algorithme (figure 12)

$I_{A1}$ →
$I_{A2}$ →
$I_{A3}$ →
$I_{A4}$ →
$I_{A5}$ →
$I_{A6}$ →

Calcul des coordonnées des taches

$T_{A1}$, $T_{A2}$, $T_{A3}$, $T_{A4}$, $T_{A5}$, $T_{A6}$

comme dans l'algorithme (figure 12)

Calcul de $G_{TA}$ centre de gravité des points $T_{A4}$, $T_{A5}$, $T_{A6}$

Calcul de distance de :

- $d_1$ = distance de $G_{TA}$ à $T_{A1}$
- $d_2$ = distance de $G_{TA}$ à $T_{A2}$
- $d_3$ = distance de $G_{TA}$ à $T_{A3}$
- $d_4$ = distance de $G_{TA}$ à $T_{A4}$
- $d_5$ = distance de $G_{TA}$ à $T_{A5}$
- $d_6$ = distance de $G_{TA}$ à $T_{A6}$

↓ vers 19b

## Fig. 19b

de 19a

Calcul de distance par théorème de Thales

$$x_1 = \frac{a*d_1}{d_4} \qquad x_1 : \text{distance de P à } T_{A1}$$

$$x_2 = \frac{b*d_2}{d_5} \qquad x_2 : \text{distance de P à } T_{A2}$$

$$x_3 = \frac{c*d_3}{d_6} \qquad x_3 : \text{distance de P à } T_{A3}$$

Calcul de sphères

SPH1 = sphère de centre $T_{A1}$ et de rayon $x_1$

SPH2 = sphère de centre $T_{A2}$ et de rayon $x_2$

SPH3 = sphère de centre $T_{A3}$ et de rayon $x_3$

Calcul de point

P = intersection des sphères SPH1, SPH2, SPH3

Calcul de points

$E_{A1}$ à distance $\underline{a}$ de P sur la droite $PT_{A1}$

$E_{A2}$ à distance $\underline{b}$ de P sur la droite $PT_{A2}$

$E_{A3}$ à distance $\underline{c}$ de P sur la droite $PT_{A3}$

Calcul des paramètres de position X, Y, Z

et d'orientation O, A, T